# EUROPEAN PATENT APPLICATION

(11) **EP 4 485 336 A1**
(43) Date of publication of application: **01.01.2025**
(21) Application number: 23759660.6
(22) Date of filing: 06.02.2023
(51) Int. Cl.: G06Q 50/06

(54) **INFORMATION PROCESSING DEVICE**

(30) Priority: 25.02.2022 JP 2022028705
(71) Applicant: Kyocera Corporation, Kyoto-shi, Kyoto 612-8501 (JP)
(72) Inventor: KUSANO Yoshimasa, Kyoto-shi, Kyoto 612-8501 (JP); TODA Kazuhide, Kyoto-shi, Kyoto 612-8501 (JP); AOKI Teppei, Kyoto-shi, Kyoto 612-8501 (JP); TOKEIJI Michitaka, Tokyo 108-0075 (JP); HOMMA Shin, Tokyo 108-0075 (JP); SAKAMOTO Yoichi, Tokyo 108-0075 (JP)
(74) Representative: TBK
(86) International application number: PCT/JP2023/003866
(87) International publication number: WO 2023/162656

(57) **Abstract**

An information processing apparatus includes a token issuing unit, a sale processing unit, and a token transfer unit. The token issuing unit issues a first token representing a share of an ownership right of a power generation facility in a predetermined database. The sale processing unit executes a transaction of a power generated by the power generation facility, based on information related to the power generation facility, information related to the share of the ownership right of the power generation facility, and information related to a price corresponding to the share. The token transfer unit transfers the first token to a purchaser in the transaction in accordance with the share of the ownership right, in response to the transaction by the sale processing unit being closed.

## Description

### CROSS-REFERENCE TO RELATED APPLICATIONS

This application claims priority from Japanese Patent Application No. 2022-28705 filed in Japan on February 25, 2022, the entire disclosure of which is incorporated herein by reference.

### TECHNICAL FIELD

The present disclosure relates to an information processing apparatus.

### BACKGROUND OF INVENTION

Self-wheeling is known in which a company transmits electricity generated using a power generation facility owned by the company to a facility of the company at another location via an electricity transmission and distribution network (see Patent Literature 1).

### CITATION LIST

### PATENT LITERATURE

Patent Literature 1: Japanese Unexamined Patent Application Publication No. 2017-163780

### SUMMARY

In an embodiment, an information processing apparatus includes a token issuing unit, a sale processing unit, and a token transfer unit.

The token issuing unit issues a first token representing a share of an ownership right of a power generation facility in a predetermined database.

The sale processing unit executes a transaction of a power generated by the power generation facility, based on information related to the power generation facility, information related to the share of the ownership right of the power generation facility, and information related to a price corresponding to the share.

The token transfer unit transfers the first token to a purchaser in the transaction in accordance with the share of the ownership right, in response to the transaction by the sale processing unit being closed.

In an embodiment, an information processing apparatus includes a token issuing unit, a predicted power generation acquisition unit, a sale processing unit, and a token transfer unit.

The token issuing unit issues a first token representing a share of an ownership right of a power generation facility in a predetermined database.

The predicted power generation acquisition unit predicts a total power generated by the the power generation facility in a predetermined time slot.

The sale processing unit executes a transaction of a power generated by the power generation facility, based on information related to the power generation facility, information related to a power predicted by a power generation prediction unit, and information related to a price corresponding to the share.

The token transfer unit transfers the first token to a purchaser in the transaction in accordance with the power predicted by the power generation prediction unit, in response to the transaction by the sale processing unit being closed.

In an embodiment, an information processing apparatus includes a token issuing unit, a sale processing unit, and a token transfer unit.

The token issuing unit issues a first token representing a share of an ownership right of a power generation facility in a predetermined database.

The sale processing unit executes a transaction of a power generated by the power generation facility, based on information related to the power generation facility, information related to an amount of carbon dioxide emission per unit power generated by the power generation facility, and information related to a price corresponding to the share.

The token transfer unit transfers the first token to a purchaser in the transaction in accordance with a power predicted by a power generation prediction unit, in response to the transaction by the sale processing unit being closed.

In an embodiment, a non-transitory tangible medium includes a program recorded thereon,
the program causing a computer to execute:
token issuing processing of issuing a first token representing a share of an ownership right of a power generation facility in a predetermined database;
sale processing of executing a transaction of a power generated by the power generation facility, based on information related to the power generation facility, information related to the share of the ownership right of the power generation facility, and information related to a price corresponding to the share; and
transfer processing of transferring the first token to a purchaser in the transaction in accordance with the share of the ownership right, in response to the transaction by the sale processing unit being closed.

Other issues disclosed by the present application and methods for overcoming the issues will become apparent from the description of the embodiments and the drawings of the present disclosure.

### BRIEF DESCRIPTION OF THE DRAWINGS

FIG. 1 is a diagram for describing an overview of electricity procurement.
FIG. 2 is a diagram for describing how a solar panel is jointly owned in the related art.
FIG. 3 is a diagram for describing how a power generation facility 13 is jointly owned.
FIG. 4 is a diagram for describing distribution of an amount of generated power.
FIG. 5 is a diagram illustrating an overview of a transaction in an electricity procurement system.
FIG. 6 is a diagram illustrating an overall configuration example of the electricity procurement system.
FIG. 7 is a diagram illustrating a hardware configuration example of a management server 2.
FIG. 8 is a diagram illustrating a software configuration example of the management server 2.
FIG. 9 is a flowchart illustrating a flow of electricity transmission processing in the electricity procurement system of the present embodiment.
FIG. 10 is a flowchart illustrating a flow of distribution according to a share of a power generation facility in the electricity procurement system of the present embodiment.
FIG. 11 is a diagram illustrating an example of a transaction screen in the electricity procurement system of the present embodiment.
FIG. 12 is a diagram illustrating an example of the transaction screen in the electricity procurement system of the present embodiment.
FIG. 13 is a diagram illustrating an example of the transaction screen in the electricity procurement system of the present embodiment.
FIG. 14 is a diagram illustrating an example of the transaction screen in the electricity procurement system of the present embodiment.
FIG. 15 is a diagram illustrating an example of the transaction screen in the electricity procurement system of the present embodiment.
FIG. 16 is a diagram illustrating an example of the transaction screen in the electricity procurement system of the present embodiment.
FIG. 17 is a diagram illustrating an example of the transaction screen in the electricity procurement system of the present embodiment.
FIG. 18 is a diagram illustrating an example of purchase of tokens in the electricity procurement system of the present embodiment.
FIG. 19 is a diagram illustrating an example of charging in the electricity procurement system of the present embodiment.
FIG. 20 is a flowchart illustrating a flow of electricity transmission processing in the electricity procurement system of the present embodiment.

### DESCRIPTION OF EMBODIMENTS

Owning a power generation facility typically requires a large initial investment, and the hurdle for owning is high. To solve the issues described above, the present disclosure provides a technique for facilitating desired electricity procurement. Embodiments of the present disclosure can facilitate desired electricity procurement. Embodiments of an electricity procurement system of the present disclosure are described below.

In an electricity procurement system of the present embodiment, a power generation facility is divided into sections using security tokens to allow sectional owning. The electricity procurement system of the present embodiment thus may reduce the initial investment for possessing the power generation facility. In the electricity procurement system of the present embodiment, the power generation facility may be assumed to be a solar panel, for example. However, in the electricity procurement system of the present embodiment, the power generation facility is not limited to the solar panel, and may be a thermal power generation facility, a storage battery, or the like. In the present disclosure, a security token is also referred to as "ST". The electricity procurement system of the present embodiment realizes a marketplace that enables highly frequent selling and buying with which STs are possessed only at the time of use. For example, this reduces the idle state of the power generation facility and secures the liquidity through pricing of the power generation facility in a secondary market, and thus can realize an increased value of the power generation facility. A consumer of electricity owns a section of the power generation facility, and thus can transmit, with use of a self-wheeling system, electricity to a power demand facility from the power generation facility whose section is owned by the consumer.

Commonly, a private power generation facility is possessed by a single company or individual in general. The present embodiment employs a model in which multiple consumer entities (consumers) can jointly possess a single power generation facility.

Large-scale power generation facilities (of not only solar power but also thermal power, wind power, and the like) of the related art involve initial investment cost, and possessing a large-scale power generation facility by a single company is a heavy burden. Some power generation facilities are used only for peak shaving during the daytime, a time for which the power generation facilities are not in operation is long, and there are needs to increase the operation rate. Alternatively, a power generation facility that is difficult to adjust an output in a short time has an issue that the amount of generated power is excessive when a demand facility is not in operation and there is no choice but to sell electricity to another company even at an unprofitable price. Although an improved profitability is attempted, for example, a mechanism for selling a sectional ownership right of the facility and allowing a purchaser to utilize the self-wheeling system to thus increase the liquidity is absent. Even if joint possession is actually carried out, a photovoltaic generation facility in which sections to be owned are physically separable and meters are installable for the respective sections to measure an amount of generated power is the only power generation facility to which joint possession is applicable. Even if joint possession is carried out, installation of the multiple meters or the like expectedly decreases the profitability. If a large-scale photovoltaic generation facility were physically divided and possessed, an amount of solar radiation and a deterioration of the panel would vary depending on the location. Therefore, even if panels having the same area are possessed, the amount of generated power varies depending on the measurement point, causing unfairness. This method of physical separation is difficult to be extended to the other power generation facilities (of thermal power, hydraulic power, wind power, geothermal power, biomass, nuclear power, other power generation methods, and a storage battery). Although in the case of solar panels, the manner of possession is in units of panels and the solar panels are physically separable, such physical separation is difficult for the other power generation facilities in the first place.

Accordingly, an electricity procurement system of the present embodiment virtually divides a power generation facility instead of physically dividing the power generation facility, represents the divisional sections using, for example, STs of a blockchain, and allows users of the power generation facility to possess an ownership right in units of the division. This enables a part of a costly power generation facility to be possessed with a small amount of money. Since the power generation facility is virtually divided, even a non-photovoltaic generation facility that has physical restrictions for division can be possessed in a divided manner.

The electricity procurement system of the present embodiment measures an amount of power generated by the power generation facility and supplies an amount of power (kWh) in a self-wheeling manner every certain time slot (for example, every 30 minutes) in accordance with a possession percentage.

The electricity procurement system of the present embodiment can electronically record the possession percentage of the power generation facility. Thus, the electricity procurement system of the present embodiment can increase the ease of selling and buying. Therefore, the electricity procurement system of the present embodiment can expectedly increase the liquidity of assets by preparing a platform that enables selling and buying of an ownership right and an offtake right of an amount of power (kWh) associated with the ownership right. The electricity procurement system of the present embodiment can increase the operation rate of an existing facility by also placing the facility on this platform.

In the electricity procurement system of the present embodiment, the aforementioned offtake right may be represented by utility tokens, for example. A utility token refers to a token that represents a secondary asset or value generated from a certain asset or value. For example, a utility token may be a token that represents a value generated from a security token. A utility token may be, for example, a type of token that the token itself does not have a monetary value and an asset property is generated only after the token is exchanged with another specific asset. In the electricity procurement system of the present embodiment, the use of utility tokens makes it possible to indicate a relationship between the offtake right corresponding to the amount of generated power and the amount of power used at the time of a transaction. In the present disclosure, a utility token is also referred to as "UT". In the present disclosure, at least one of an ST (security token) or a UT (utility token) is sometimes simply referred to as a "token".

When assets of photovoltaic generation are possessed in a shared manner, or when self-wheeling of electricity is performed using these assets, appropriately distributing an amount of generated power in accordance with the share of the assets is assumed to be necessary. The use of a blockchain system recognized as being highly tamper-resistant, as a means for proving the share and a means for recording the amount of generated power associated with an owner, is considered effective. For example, in the electricity procurement system of the present embodiment, a smart contract for moving the UTs in accordance with the share of the STs may be constructed. The smart contract refers to a computer protocol intended for automation of a contract or smooth verification, execution, enforcement, and negotiation of a contract. For example, the smart contract may be implemented in an application that runs on the blockchain. The smart contract has a feature that a transaction can be processed with the credibility guaranteed without involvement of a third party. The electricity procurement system of the present embodiment enables not only realization of finance utilizing direct financing (STO: security token offering) but also realization of both of right protection (appropriate distribution of the amount of generated power) of investors (for example, owners of solar panels) and securing of liquidity (ease of transferring the assets).

For example, persons who have jointly invested in a power generation facility such as solar panels can possess STs corresponding to the respective investments. For example, suppose that the entire power generation facility such as solar panels is equivalent to 40 STs. In this case, a person A who has invested in 50% of the power generation facility may possess 20 STs in accordance with the investment. For example, a person B who has invested in 12.5% of the power generation facility may possess 5 STs in accordance with the investment. For example, a person C who has invested in 37.5% of the power generation facility may possess 15 STs in accordance with the investment. Hereinafter, the security tokens (STs) may be referred to as units of tokens, such as 20 STs, 5 STs, and 15 STs described above.

On the other hand, suppose that the aforementioned power generation facility is scheduled to generate a power of 80 kWh in 30 minutes on a predetermined day, for example. In this case, the aforementioned person A may possess, for example, 40 UTs as the right to receive 50% of 80 kWh. For example, the aforementioned person B may possess, for example, 10 UTs as the right to receive 12.5% of 80 kWh. For example, the aforementioned person C may possess, for example, 30 UTs as the right to receive 37.5% of 80 kWh. As described above, the UTs may be distributed in accordance with the share of the STs. Hereinafter, the utility tokens (UTs) may be referred to as units of tokens, such as 40 UTs, 10 UTs, and 30 UTs described above.

By adopting the STs that are security tokens of the blockchain, a transaction is completed through an exchange of the STs between wallets. This facilitates selling of the assets, and creation of a secondary market is expected. By adopting the UTs that are tokens representing the amount of power (to be acquired), not only appropriate distribution of the amount of generated power, output suppression, and the like can be coped with but also the consistency of the wheeling fee can be checked.

As described above, the electricity procurement system of the present embodiment enables a power generation facility to be owned with an initial investment of a small amount through division of tokens.

The electricity procurement system of the present embodiment can perform an operation in which selling is performed only for a time slot in which the power generation facility is not used, to realize a platform for highly frequently selling and buying the tokens. This adds an option of selling or temporary selling to the possession form of the power generation facility which tends to be rigid, and thus expectedly makes the investment in the assets more active. Therefore, the liquidity of the assets can be secured and the value of the assets can be increased.

The electricity procurement system of the present embodiment can realize a mechanism in which the ownership right (STs) virtually segmented with tokens and the offtake right (UTs) of the power (kWh) are combined, instead of physically dividing the actual power generation facility (the physical division is difficult except for the solar panels in the first place). Therefore, power generation facilities that can be jointly possessed are not limited, and the electricity procurement system of the present embodiment is applicable to thermal power, hydraulic power, wind power, geothermal power, biomass, nuclear power, all other power generation methods, and a storage battery.

The electricity procurement system of the present embodiment enables temporary selling of a not-in-use time period of, for example, a power generation facility or the like which is used only in a specific season or a time slot in a factory or the like. Therefore, while the power generation facility is kept in operation at all times even if a time slot when a power load is not in operation is present, a profit can be received. Consequently, an increased operation rate of the facility is expected, and as an additional effect, for example, the operation cost for power generation in the entire country such as Japan is reduced and/or the profitability of having the power generation facility is improved (since a consumer entity who needs short-term electricity procurement of peak shaving or the like can also use the facility regardless of the magnitude of demand, the electricity may be sold at a higher price than a price at which the electricity is sold to a normal power company).

The power generation facility is possessed in a virtually divided manner, so that unfairness among owners caused by deteriorations of individual panels and/or a difference in the amount of generated power due to a difference in the amount of solar radiation no longer occurs. Consequently, for example, unfairness caused by a variation (difference) in the amount of generated power between the solar panels as in the community solar of the related art can be eliminated.

### <Overview of Electricity Procurement>

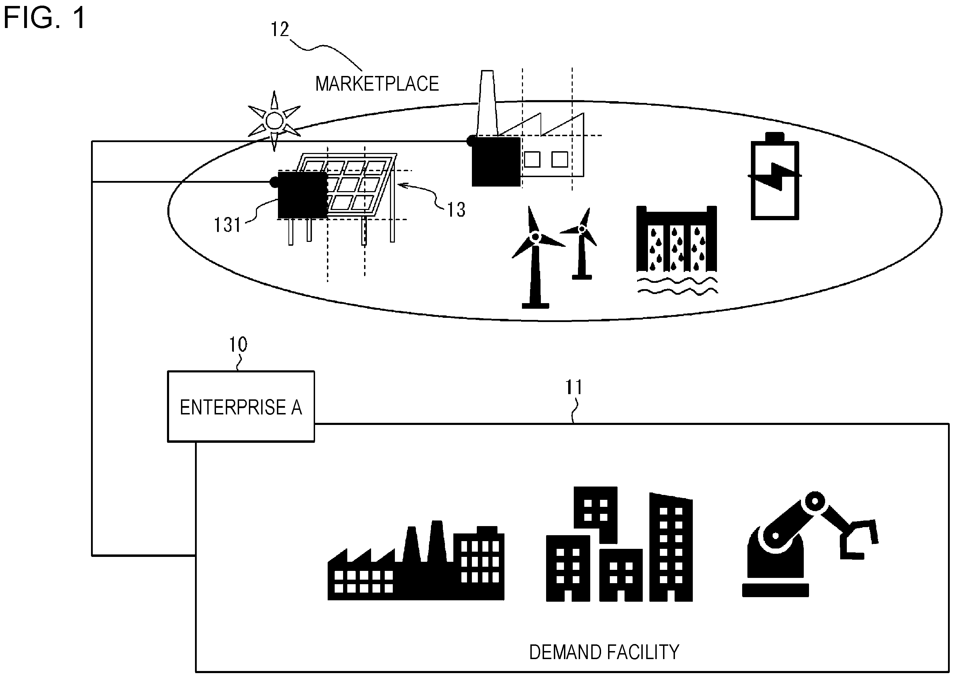

FIG. 1 is a diagram for describing an overview of electricity procurement in an embodiment. A consumer 10 (enterprise A) has a demand facility 11. When procuring electricity to be used in the demand facility 11, the consumer 10 procures a section 131 obtained by virtually dividing a power generation facility 13 from a marketplace 12. The section 131 may be a section virtually possessed by the STO described above. The electricity generated by the power generation facility 13 is divided in accordance with the share (STs) of the power generation facility 13, and is supplied from the power generation facility 13 to the demand facility 11 by self-wheeling. The electricity is actually transmitted by an electricity transmission company. However, part of the amount of generated power from the power generation facility 13 is regarded as being virtually transmitted to the demand facility 11. Self-wheeling refers to a service provided by a general electricity transmission and distribution company when an entity that installs a private power generation facility transmits electricity generated by using the private power generation facility to a factory or the like, at a different location, of the entity that installs the private power generation facility via an electricity transmission and distribution network that is maintained and operated by the general electricity transmission and distribution company. In this manner, the electricity can be supplied by self-wheeling. The presence of the marketplace 12 ensures the liquidity of (the sections of) the power generation facility 13. Therefore, the consumer 10 can acquire a share of a necessary ratio when necessary and perform self-wheeling from the private power generation facility 13. That is, in the present embodiment, the consumer 10 can possess the power generation facility 13 only at the time of use and procure the amount of power only at the time of use.

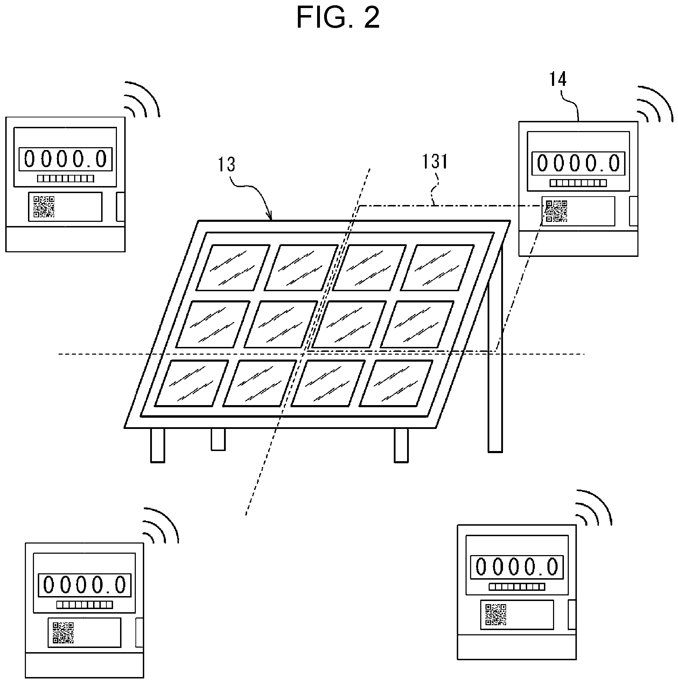

FIG. 2 is a diagram for describing how a solar panel is jointly owned in the related art for reference. In the related art, when a solar panel is jointly owned, a sectional owner actually owns a physically divided unit (for example, 1/3) of the power generation facility 13 (solar panel). In this case, for example, a smart meter 14 is installed for each physical section 131 in the single power generation facility 13, and the amount of generated power of each section 131 is managed.

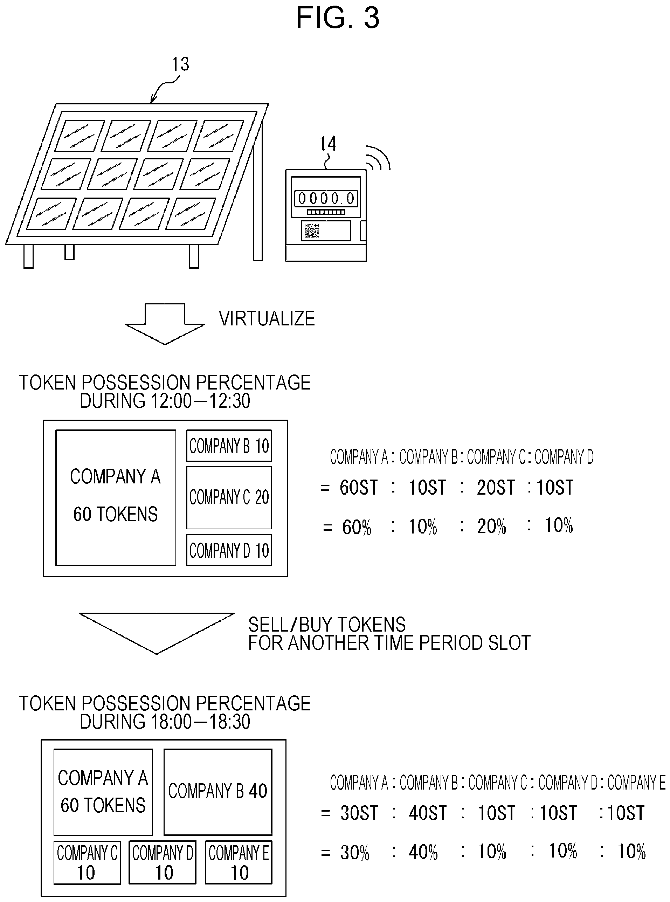

FIG. 3 is a diagram for describing how the power generation facility 13 is jointly owned according to the present embodiment. That is, FIG. 3 is a diagram for describing an example in which the STO is performed using a solar panel. In the present embodiment, the power generation facility 13 itself may be, for example, a solar panel that is the same as or similar to that used in community solar of the related art. In the example of FIG. 3, only a single smart meter 14 is installed in the power generation facility 13. This single smart meter 14 measures an amount of power generated by the entire power generation facility 13. Suppose that 100 tokens are issued for the power generation facility 13 as STs. Suppose that four companies that are companies A, B, C, and D share the power generation facility 13 and have shares of 60%, 10%, 20%, and 10%, respectively. In this case, the company A possesses 60 tokens, the company B possesses 10 tokens, the company C possesses 20 tokens, and the company D possesses 10 tokens, and the percentages of the shares can be verified (with the STs). The amount of power generated by the power generation facility 13 (measured by the smart meter 14) is regarded to be divided (with UTs) in accordance with these percentages and to be self-wheeled to the respective companies. As described above, in the present embodiment, the facility can be possessed according to the percentage of the STs, and the offtake right (UTs) of the amount of power (kWh) generated from the facility can be possessed. Suppose that in another time slot, the company A sells 30 tokens, the company B additionally purchases 30 tokens, the company C sells 10 tokens, and a company E purchases 10 tokens. Also in this case, the amount of power generated by the power generation facility 13 is regarded to be virtually divided (with UTs) in accordance with these possession percentages of the tokens and to be self-wheeled to the respective companies. In this way, buying and selling of the amount of power enabled in the unit time (time slot) of measurement, so that the liquidity can be created in the market. The amount of power can be measured and distributed for each time slot of a length of a predetermined time (which can be set to 30 minutes, for example). Note that the length of the time slot may be set to any length that varies depending on the market.

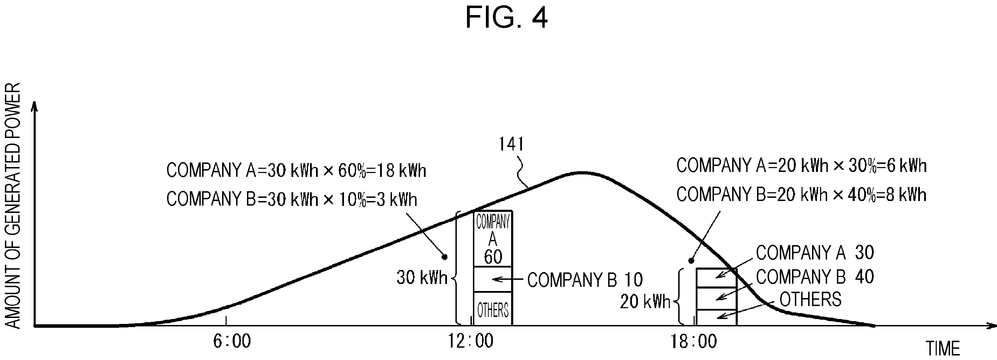

FIG. 4 is a diagram for describing distribution of an amount of generated power. In the example of FIG. 4, a curve 141 represents a temporal transition of the amount of generated power from the power generation facility 13. Suppose that the power generation facility 13 generates a power of 30 kWh at (in a time slot of 30 minutes from) 12:00, the company A possesses 60 tokens out of 100 tokens, and the company B possesses 10 tokens out of 100 tokens. In this case, an amount of power procured by the company A is 30 kWh × 60/100 = 18 kWh, and an amount of power procured by the company B is 30 kW × 10/100 = 3 kWh. Likewise, suppose that the power generation facility 13 generates a power of 20 kWh at 18:00, and the company A possesses 30 tokens and the company B possesses 40 tokens in that time slot. In this case, an amount of power procured by the company A is 20 kWh × 30/100 = 6 kWh, and an amount of power procured by the company B is 20 kWh × 40/100 = 8 kWh.

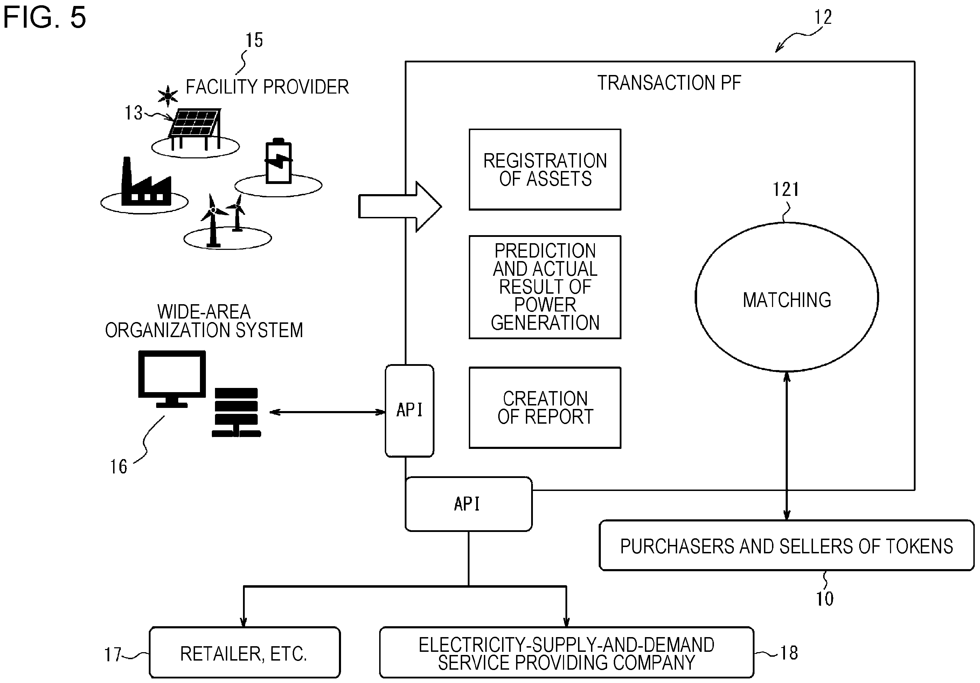

FIG. 5 is a diagram illustrating an overview of a transaction in the electricity procurement system of the present embodiment. In the marketplace 12 (transaction platform (transaction PF)), a facility provider 15 (which may also be a facility owner) registers information on the power generation facility 13 and issues tokens (registration of assets). Then, a consumer 10 serving as a seller of tokens registers desired selling conditions. A consumer 10 serving as a purchaser of tokens sets desired purchase conditions (priorities or the like are settable for the conditions) such as the power generation type (such as solar power or wind power) of the power generation facility 13, an amount of power, a price, a time slot, and/or a region. In this way, matching 121 is performed for the section 131 of the power generation facility 13 in the marketplace 12. Matching is performed in each slot of 30 minutes (which is a current time unit of power measurement and, if the unit time is changed, is based on a newly specified unit time) from the current time (reservation of selling and buying). Then, when the actual date reaches this time slot, the ownership right, i.e., STs, (and the offtake right, i.e., UTs) of the section 131 of the power generation facility 13 is transferred from the seller to the purchaser. Along with this transfer, an amount of tokens corresponding to the percentage of the share for the section 131 are transferred to a wallet of the consumer 10 that is the purchaser. This proves the transfer of the ownership right (and the offtake right).

The marketplace 12 can automatically calculate an offtake amount (UTs) of a power (kWh) according to the amount of generated power (predicted value and/or actual value) and the token possession percentage (STs). Along with this, the marketplace 12 can record the amount of generated power (prediction and actual result of power generation) and generate a report to the Organization for Cross-regional Coordination of Transmission Operators, JAPAN (OCCTO) and/or owners of the tokens (creation of report).

The information from the marketplace 12 can be acquired using an API (Application Programming Interface). For example, an OCCTO system (wide-area organization system 16) can acquire a report of planned values via an API. This data integration can automate integration of creation of notification data and/or report data required by the regulations of self-wheeling or the like. A retailer 17 can also sell and buy tokens in the marketplace 12 in the same or similar manner as or to the consumers 10. Thus, the retailer 17 can provide electricity procurement utilizing tokens as a menu for customers, and can utilize the tokens as an electricity procurement means of the retailer itself. In this way, electricity procurement by self-wheeling utilizing tokens may be provided. The use of the API enables integration with a system used by the retailer 17. An electricity-supply-and-demand service providing company 18 can sell and buy tokens in the marketplace 12 in the same or similar manner as or to the consumers 10. Thus, the electricity-supply-and-demand service providing company 18 can utilize selling and buying of tokens as part of an electricity service menu for customers such as peak shaving, for example. The API described above also enables integration with a system used by the electricity-supply-and-demand service providing company 18.

### <Overview of System>

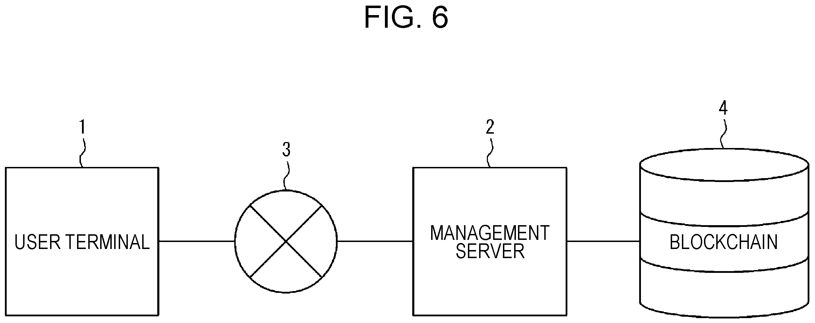

FIG. 6 is a diagram illustrating an overall configuration example of the electricity procurement system. The electricity procurement system of the present embodiment includes a management server 2. The management server 2 is communicably connected to a user terminal 1 via a communication network 3. The communication network 3 is, for example, Internet, and may be constructed by a public telephone network, a mobile phone network, a wireless communication channel, Ethernet (registered trademark), or the like. The management server 2 is connected to a blockchain network (hereinafter referred to as a blockchain 4). The blockchain 4 is constituted by multiple computers (nodes) and manages distributed ledgers.

The user terminal 1 is a computer operated by the consumer 10, and can be, for example, a smartphone, a tablet computer, or a personal computer. The user terminal 1 may also encompass the wide-area organization system 16. The user terminal 1 may also encompass the system of the retailer 17 and/or the system of the retailer service providing company 18. The consumer 10 (the OCCTO, the retailer 17, or the electricity-supply-and-demand service providing company 18) can access the management server 2 via the user terminal 1.

The management server 2 is a computer that realizes the marketplace 12. The management server 2 may be, for example, a general-purpose computer such as a workstation or a personal computer, or may be logically realized by cloud computing.

The blockchain 4 may be based on a database technology for recording information. In the present embodiment, in the same or similar manner as or to a general blockchain, the blockchain 4 may manage data in units called blocks, and link the blocks like a chain for storage of the data. In each block of the blockchain, data called a hash value representing the content of an immediately preceding block is written. If the data is falsified, a hash value derived from the falsified data also becomes different. Therefore, hash values of all the subsequent blocks need to be changed. However, since the changing is extremely difficult, falsification of the data managed by the blockchain is considered to be difficult. The blockchain manages the same data at multiple locations in a distributed manner. For this reason, the blockchain is also referred to as distributed ledgers. The blockchain can be used for general purposes. At present, many applications and the like have been devised in addition to a smart contract that automates contracts, transactions, and the like.

In the electricity procurement system of the present embodiment, the blockchain 4 may be based on the same or similar technology as or to the general blockchain described above. However, in an embodiment, the blockchain 4 based on a database technology instead of the general blockchain technology may be adopted.

### <Management Server 2>

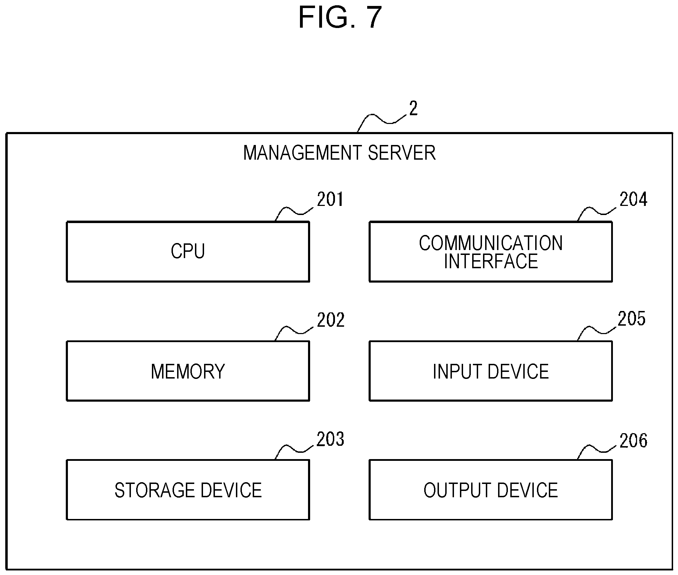

FIG. 7 is a diagram illustrating a hardware configuration example of the management server 2. Note that the illustrated configuration is an example, and a part of the illustrated configuration may be omitted or a configuration other than the illustrated configuration may be included. The management server 2 includes a CPU (central processing unit) 201, a memory 202, a storage device 203, a communication interface 204, an input device 205, and an output device 206. The storage device 203 stores various kinds of data and/or programs. The storage device 203 may be, for example, a hard disk drive, a solid-state drive, a flash memory, or the like. The communication interface 204 is an interface for connection to the communication network 3. The communication interface 204 may be, for example, an adapter for connection to Ethernet (registered trademark), a modem for connection to a public telephone network, a wireless communication device for performing wireless communication, a USB (Universal Serial Bus) connector or RS232C (Recommended Standard 232 version C) connector for serial communication, or the like. The input device 205 is a device used to input data. The input device 205 may be, for example, a keyboard, a mouse, a touch panel, a button, a microphone, or the like.

The input device 205 receives input of a command to each functional unit, which is described later, included in the management server 2. The output device 206 is a device used to output data. The output device 206 may be, for example, a display, a printer, a speaker, or the like. Each functional unit, which is described later, included in the management server 2 may be realized as a result of the CPU 201 reading a program stored in the storage device 203 into the memory 202 and executing the program. The CPU 201 may interpret a command that is input via the input device 205 and is for each functional unit, which is described later, included in the management server 2. The CPU 201 may create information to be displayed on the output device 206, and control the output device 206 such that a command to cause the output device 206 to display the information is issued to the output device 206. Each storage unit included in the management server 2 may be realized as a part of a storage area provided by the memory 202 and the storage device 203.

The number of input devices 205 and the number of output devices 206 each may be one or multiple. The input device 205 and the output device 206 may be an integrated device such as a touch panel, for example. Although an example of the management server 2 including the input device 205 and the output device 206 has been described, the management server 2 is not limited to this. For example, the management server 2 may not include the input device 205 and the output device 206. While the management server 2 includes the input device 205 and the output device 206, the input device 205 and the output device 206 may also be present outside. When the input device 205 and the output device 206 are outside the management server 2, the management server 2 may exchange various commands and information with the external input device 205 and the external output device 206 via the communication interface 204. Specifically, the external input device 205 may receive a command to each functional unit, which is described later, included in the management server 2. In this case, the management server 2 may receive this command via the communication interface 204. The CPU 201 may interpret the command received in this manner. The CPU 201 may create information to be output to the external output device 206, and transmit a command to cause the external output device 206 to output the information to the external output device 206 via the communication interface 204.

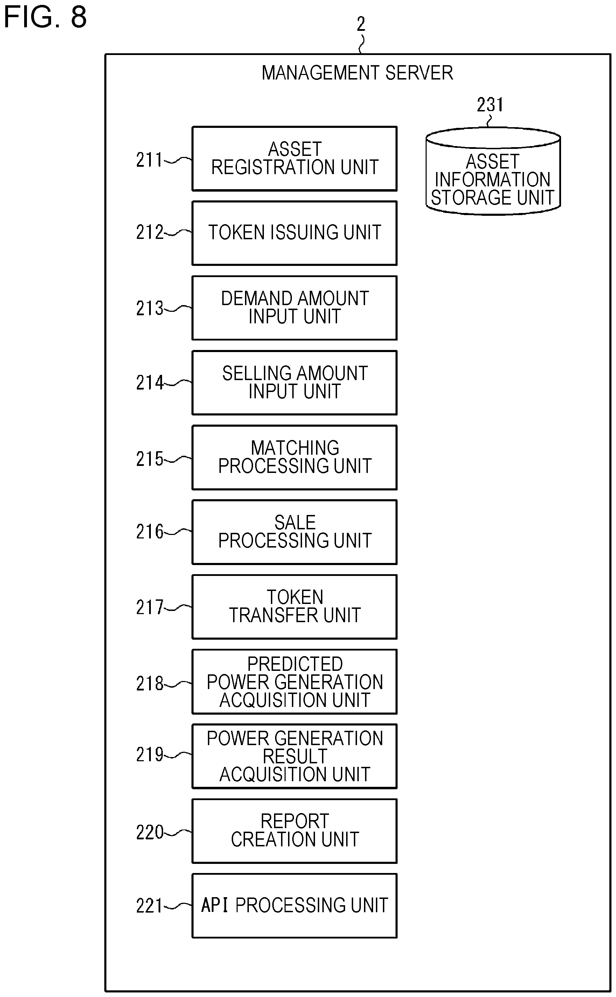

FIG. 8 is a diagram illustrating a software configuration example of the management server 2. The management server 2 includes an asset registration unit 211, a token issuing unit 212, a demand amount input unit 213, a selling amount input unit 214, and a matching processing unit 215. The management server 2 also includes a sale processing unit 216, a token transfer unit 217, a predicted power generation acquisition unit 218, a power generation result acquisition unit 219, a report creation unit 220, an API processing unit 221, and an asset information storage unit 231.

The asset information storage unit 231 stores, for each power generation facility 13, information on the power generation facility 13 (hereinafter referred to as asset information). The asset information can include, for example, a type, an output, an installation location, and/or the like of the power generation facility 13.

The asset registration unit 211 registers the asset information in the asset information storage unit 231. The asset registration unit 211 can receive the asset information from the user terminal 1 of the facility provider 15 and write the received asset information in the asset information storage unit 231. The asset registration unit 211 can also register information (hereinafter referred to as owner information) on the owner (initially, the facility provider 15) of the power generation facility 13. In the present embodiment, the owner information may be managed in the ledgers of the blockchain 4. The asset registration unit 211 can issue, to the blockchain 4, a transaction for registering the owner information.

The token issuing unit 212 issues tokens (STs and UTs) that are backed up with the power generation facility 13 and represent the ownership right and the offtake right of the power generation facility 13 in the blockchain 4. Since a technique employed in the general STO can be used in issuance of tokens, a more detailed description is omitted. The token issuing unit 212 can issue any number of tokens. In the example of FIGs. 3 and 4, 100 tokens are issued for one power generation facility 13. However, the token issuing unit 212 may issue any number of tokens such as 10 tokens or 2000 tokens. The issued tokens are put into the wallet of the owner (the facility provider 15) of the power generation facility 13.

The demand amount input unit 213 receives, from the consumer 10, input of a demand amount of power desired to be procured from the power generation facility 13. The demand amount input unit 213 can receive, from the user terminal 1 of the consumer 10, for example, information in which a demand amount is set in a purchase request for acquiring a section 133 of the power generation facility 13. The demand amount input unit 213 may receive designation of a condition for the power generation facility, together with the demand amount. In the purchase request, a power generation type (such as photovoltaic generation or wind power generation) of the power generation facility 13, a demand amount (an amount of power desired to be procured), a time slot, and/or the like may be designated. In the purchase request, information for identifying the individual power generation facility 13, information for identifying a specific power plant, designation of a region in which the power generation facility 13 is disposed, and/or the like may be set. In the purchase request, designation of information on a predicted power generation value of the power generation facility 13, information on a self-wheeling destination, and/or the like may be set. In the purchase request, a desired price of purchase may be set as a limit price. In the purchase request, multiple conditions may be set and priorities may be set for the conditions.

The selling amount input unit 214 receives designation of tokens desired to be sold, from a seller (the facility provider 15 or the consumer 10) who desires to sell the tokens. The selling amount input unit 214 can receive a sell request from the user terminal 1 of the seller, for example. In the sell request, tokens to be sold and a selling price thereof can be set. As the selling price, the lowest price can be set. As the selling price, a range from the lowest price to the highest price can also be designated.

The matching processing unit 215 can match a sell request and a purchase request. The matching processing unit 215 can search for asset information that matches the condition designated in the purchase request. The matching processing unit 215 can identify a sell request of tokens backed up with the power generation facility 13 indicated by the matching asset information. The matching processing unit 215 can allocate the tokens associated with the identified sell request to the purchaser. For example, the matching processing unit 215 can allocate the sell request in accordance with the condition of the received purchase request in the reception order of the purchase request. The matching processing unit 215 can also collectively allocate the purchase requests and the sell requests received in a predetermined period. For example, the matching processing unit 215 can perform matching processing that is the same as and/or similar to sale processing in a stock market.

The sale processing unit 216 performs processing related to sale of tokens to the consumer 10. The sale processing unit 216 can perform processing of accepting payment from a purchaser of the tokens and making payment to a seller. The sale processing unit 216 may subtract a commission from the amount paid by the purchaser and make payment to the seller.

The token transfer unit 217 performs transfer processing of transferring an amount of tokens corresponding to the sold share of the power generation facility 13 to the wallet of the consumer. The transfer of tokens may be automatically performed by a program on the blockchain upon the actual date and time reaching the date and time of each slot (for example, every 30 minutes). The token transfer unit 217 can issue, to the blockchain 4, a transaction for transferring the sold tokens from the wallet of the seller to the wallet of the purchaser. Thus, the token transfer unit 217 can transfer an amount of tokens corresponding to the demand amount of the consumer 10 to the wallet of the consumer.

The predicted power generation acquisition unit 218 acquires a predicted value of the amount of power to be generated by the power generation facility 13. The predicted power generation acquisition unit 218 may predict the amount of power to be generated, or may acquire the predicted value from an external computer that has predicted the amount of power to be generated. For example, the predicted power generation acquisition unit 218 can predict an amount of solar radiation for the power generation facility 13 related to photovoltaic generation. The predicted power generation acquisition unit 218 may calculate the predicted value of the amount of power to be generated by the power generation facility 13 from, for example, data indicating past records of various conditions such as weather, the amount of solar radiation, temperature, and/or humidity. The predicted power generation acquisition unit 218 may calculate the predicted value of the amount of power to be generated by the power generation facility 13 in consideration of an output suppression hereafter and/or a weather forecast. The output suppression is that an electricity company or the like restricts supply from a power generation facility of photovoltaic generation or the like to an electric power system. For example, the output suppression may be output suppression made until noon on the previous day, or the plan may be changed on the day. The predicted power generation acquisition unit 218 may change the amount of power generated by the power generation facility 13 in accordance with whether or not the power generation facility 13 is a power supply to be subjected to output control. The predicted power generation acquisition unit 218 may change the amount of power generated by the power generation facility 13 in accordance with whether or not the region is likely to be subjected to output suppression. The predicted power generation acquisition unit 218 may receive the predicted value of the amount of power to be generated, from the user terminal 1 of the owner or the facility provider 15 of the power generation facility 13.

The power generation result acquisition unit 219 can acquire an actual value of the amount of power generated by the power generation facility 13 from the smart meter 14 provided in the power generation facility 13.

The report creation unit 220 can output a report on a power generation plan. The report creation unit 220 divides the predicted value of the amount of power to be generated by the power generation facility 13 in accordance with the total amount of tokens (hereinafter, an amount of tokens scheduled to be possessed) of an amount of tokens possessed in the wallet of the consumer 10 and an amount of matched tokens scheduled to be moved in a future slot. The report creation unit 220 can include the predicted value of the amount of power to be generated thus divided in the power generation plan for each consumer 10. The report creation unit 220 can output a report on a power generation result. The report creation unit 220 proportionally divides the actual value acquired from the smart meter 14 in accordance with the amount of tokens scheduled to be possessed by the consumer 10. The report creation unit 220 can include the proportionally divided amount of generated power (divided actual power generation value) in the power generation result. The report creation unit 220 may include the predicted value predicted in the power generation plan, in the power generation result.

The report creation unit 220 can provide the facility provider 15 of the power generation facility 13, the purchaser, and/or the seller with a GUI (graphical user interface) (viewing screen) that enables viewing of information (asset information) on the power generation facility 13 possessed by the facility provider 15, the purchaser, and/or the seller. The viewing screen can include the predicted value of the amount of power to be generated, the possession percentage of the power generation facility 13, and/or basic information of the power generation facility 13.

The report creation unit 220 can create a plan sheet for the Organization for Cross-regional Coordination of Transmission Operators, JAPAN (OCCTO). The report creation unit 220 can automatically submit the plan sheet to the wide-area organization system 16. Based on the asset information, the predicted value of the amount of power to be generated, and/or the actual value of the amount of generated power acquired from the smart meter 14, the report creation unit 220 can create a form in which information desired when the owner or operator of the power generation facility 13 performs system integration is written.

The API processing unit 221 can provide an API to an external apparatus of the management server 2. The API can be, for example, REST (representational state transfer). In response to a request from the external apparatus, the API processing unit 221 can extract necessary information from information managed by the management server 2 and the blockchain 4 and provide an API. By using the API, the management server 2 can perform data integration with the wide-area organization system 16. Based on data managed by the management server 2 and the blockchain 4, the API processing unit 221 can additionally create a form or perform system integration for a document to be submitted to a retailer and/or a general electricity transmission and distribution company. With the API, a mechanism can be provided in which a retailer and/or a company that provides services for consumer entities can integrate selling and buying conditions and perform a transaction via a system of the retailer and/or the company.

### <Operation>

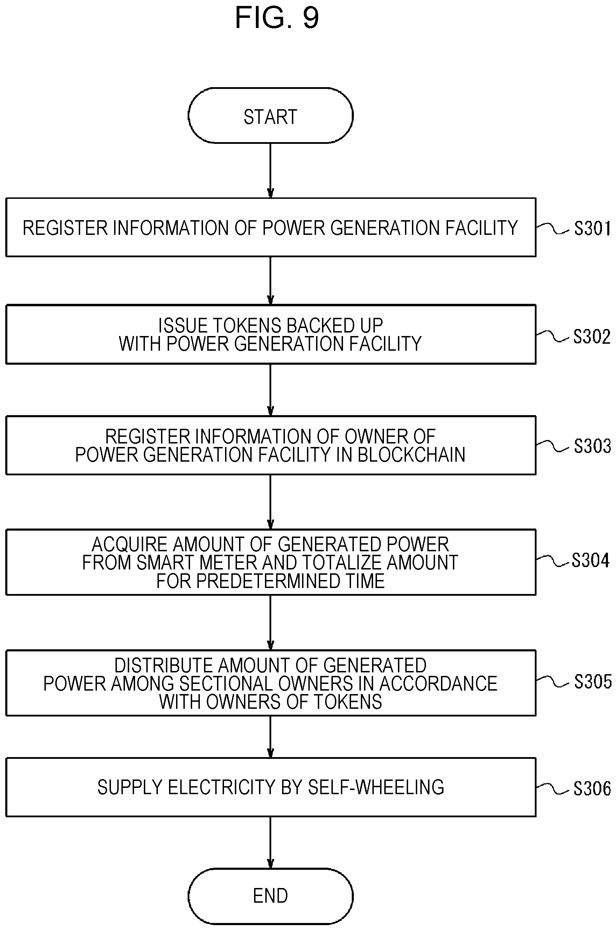

FIG. 9 is a flowchart illustrating a flow of electricity transmission processing in the electricity procurement system of the present embodiment.

The management server 2 receives the asset information of the power generation facility 13 and records (registers) the asset information in the asset information storage unit 231 (S301). The asset information may include a type, an output, an installation location, and/or the like of the power generation facility 13. In step S301, for example, a facility owner may register the asset information of the power generation facility. A measure for making registration by spoofing difficult may be provided when the asset information of the power generation facility is registered. For example, the retailer may temporarily buy tokens corresponding to the asset information of the power generation facility 13.

The management server 2 then issues (STO) tokens backed up with the power generation facility 13 (S302). In step S302, the management server 2 may issue any number of tokens. However, a transaction may be expectedly facilitated if an index such as an upper limit or reference of tokens to be issued is set. Accordingly, for example, 100 tokens may be given for one power generation facility 13, and the amount thus given may represent the possession percentage of that facility. In this case, the amount of power corresponding to the tokens may be separately calculated and displayed. The number of tokens per amount of power generated by the power generation facility 13 may be issued. In particular, when a transaction of an amount of power across multiple power generation facilities is desired, the number of tokens per amount of power to be generated may be issued. For example, a value obtained by multiplying the number of tokens given per predetermined unit output (kWh) by the maximum output kWh which is the capacity of a power generation facility may be determined as the number of tokens to be issued for the power generation facility. For example, when 1 ST is determined to be issued per 1 kWh and the maximum output of the power generation facility is 150 kWh, 150 tokens may be determined to be issued. In this case, the issued tokens may be expected to deviate from the percentage of the share of the power generation facility 13. A compensation may be separately given for this deviation from the share. In the case described above, the maximum output may be a rated output which is the maximum value of an output used under a certain condition.

The share of the power generation facility 13 may be determined after an amount of power for which the transaction has been completed is determined. The amount of power generated by the power generation facility 13 may be changed in accordance with a past result of a period or a time of power generation. In this case, an amount of tokens may be changed in accordance with the change in the amount of power generated by the power generation facility 13. An amount of power acquirable in the future may be converted into the current value to enable a transaction of the tokens. For example, the conversion may be performed such that the later in the future from the present the amount of power becomes acquirable, the more the charge is discounted.

After issuing the tokens, the management server 2 can ask for a prospective sectional owner of the power generation facility 13. The consumer 10 of electricity possesses the tokens to thus have the sectional ownership right (represented by STs) of the power generation facility 13 and the offtake right (represented by UTs) of the amount of power (kWh) generated from the power generation facility 13.

The management server 2 can record (register) owner information of the token owner (initially, the facility provider 15) in the ledgers of the blockchain 4 (S303). The management server 2 can acquire the amount of power generated by the power generation facility 13 from a measurement device such as the smart meter 14, and totalize the amount of generated power (kWh) for a certain reference time such as 30 minutes (the measurement time can be set in any manner) (S304). The management server 2 can allocate the amount of generated power to the sectional owner in accordance with the amount of possessed tokens (including matched tokens scheduled to be moved in a future slot) (S305), and supply electricity in a self-wheeling manner (S306).

The supply of electricity by self-wheeling performed in S306 may be performed after a plan of self-wheeling is created and then reported to the OCCTO, for example. For example, after the completion of matching by the matching processing unit 215, the management server 2 may automatically calculate a planned value of self-wheeling and automatically transmit the planned value to the OCCTO or the like. In S306, the management server 2 may permit supply of only an amount of generated power suitable for the planned value of self-wheeling.

A needed power generation capacity of the power generation facility 13 may expectedly vary depending on a demand amount of electricity desired to be procured from the power generation facility 13 and the time slot in which the electricity is desired. The demand amount input unit 213 can receive, from the user terminal 1 of the consumer 10, information in which a demand amount is set in a purchase request for acquiring the section 133 of the power generation facility 13. Accordingly, the purchase request may include information designating a time slot or may include a predicted amount of power to be generated in that time slot.

The management server 2 provides a transaction platform that enables selling and buying of tokens possessed by users. The management server 2 provides a transaction platform that enables selling and buying in a period as early as the power generator allows from the previous day of the power generation (in the previous day's market).

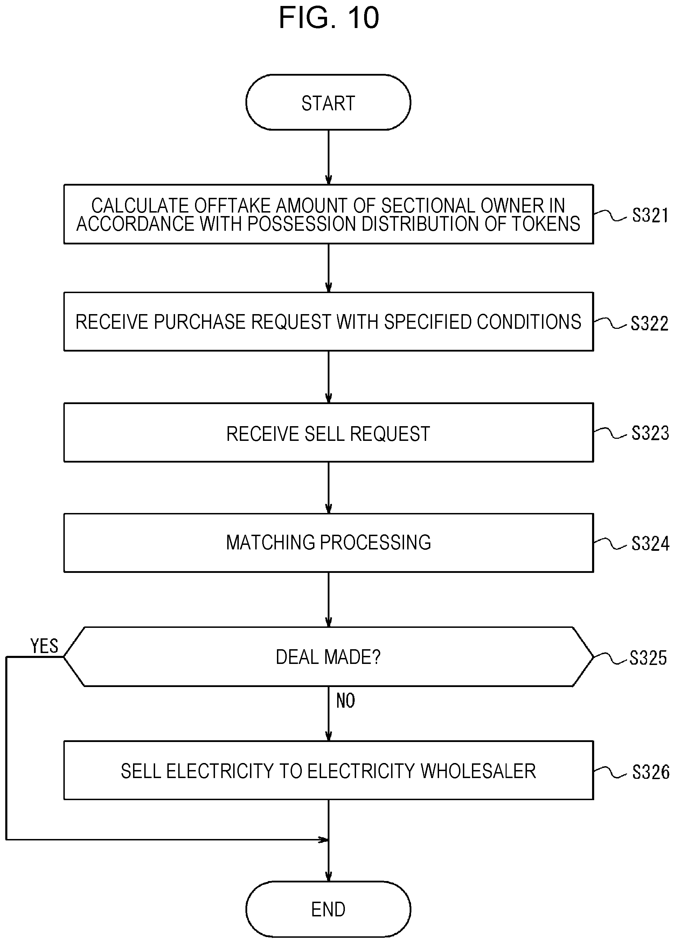

FIG. 10 is a flowchart illustrating a flow of distribution according to a share of a power generation facility in the electricity procurement system of the present embodiment.

The management server 2 calculates an offtake amount (which may be represented by UTs) of an amount of generated power (kWh) for the consumer 10 in accordance with a possession percentage of STs (including matched tokens scheduled to be moved in a future slot) (S321). The management server 2 receives a purchase request with set conditions from a purchaser (S322). As described above, in the purchase request, a power generation type (solar power, wind power, or the like), an amount of power, a price, a time slot, and/or a region, and priorities for the conditions or the like can be set. In addition to these, the settable conditions can include contents that are the same as or similar to the conditions of a stock transaction platform (such as a limit price, a stop price, or conditional selling and buying when a certain price is reached).

The management server 2 receives a sell request (S323). The management server 2 matches tokens designated by the sell request with the purchase request, based on the conditions set in the purchase request (S324). Processing of matching performed in step S324 is also referred to as "matching processing".

In the matching processing, matching can be performed in detail such that the condition setting is matched with an actual transaction state of electricity for the purchaser and the seller. For example, selling or buying can be continued from the power generation facility 13 that meets the designated conditions (solar power or the like) until a certain amount of power (kWh) is reached without setting a selling price (or by giving a range to the price or at the market price). A region can be designated in the purchase request, and purchase can also be continued from one or more power generation facilities 13 installed in the designated region until a predetermined amount of power (kWh) is reached or a total value of purchase prices reaches a predetermined amount. A purchase price alone can be designated, and purchase or sale can also be continued without designating the amount of power (kWh). A time slot alone can be set in the purchase request, sale or selling can also be continued until a certain amount of power (kWh) is reached within the designated time slot. No conditions may be set, or priorities may be given to the conditions.

In the matching processing performed in step S324, a transaction screen for displaying predetermined transaction information may be displayed. In this case, the output device 206 or the like may display the transaction screen. For example, in the matching processing, whether or not a power generation facility is a facility subjected to output suppression may be displayed. When the matching processing is performed, a predicted value of the amount of power to be generated by the power generation facility may be displayed instead of the amount of power generated by the power generation facility being displayed. In the matching processing, for example, an index or the like of reliability of prediction of the amount of power to be generated by the power generation facility may be displayed. In the matching processing, whether a minimum output capacity is guaranteed by the power generation facility 13 within a transaction target period and/or a specific value (kWh) of the minimum output capacity may be displayed. In the matching processing, a specific compensation content provided if the actual value falls below the value of a guaranteed minimum power capacity may be displayed.

When the predicted value of the amount of power to be generated by the power generation facility at the time of the matching processing deviates from the actual value, an action corresponding to the deviation may be taken. When such a deviation occurs, a feedback about such a deviation may be made to increase the prediction accuracy or decrease the index of reliability.

After the matching processing, if a deal fails (S325: NO), the management server 2 does not transfer the tokens from the seller (therefore, does not transfer the ownership right and the offtake right). In this case, the electricity from the power generation facility 13 may be sold to a wholesale electricity exchange (S326). In this case, the electricity may be sold to a retailer over the counter instead of in a wholesale market.

The matching processing in the present embodiment is further described below. The matching processing in the present embodiment may be, for example, the processing performed in step S324 illustrated in FIG. 10.

As described above, the matching processing unit 215 of the management server 2 may perform the same and/or similar matching processing as and/or to sale processing in an ordinary stock market. When matching the sell request and the purchase request, the matching processing unit 215 may perform matching from viewpoints of, for example, a (current) amount of power and/or a share percentages (of tokens), a price, and the like. Specifically, the matching processing unit 215 may perform matching, for example, from viewpoints below.

### (1) Share Percentage (of Tokens) of Power Generation Facility 13 and Price

That is, a transaction may be performed by displaying a share percentage (of tokens) of the power generation facility 13 and a price thereof.

### (2) Amount of Power Generated by Power Generation Facility 13 and Price

That is, a transaction may be performed by displaying an amount of power generated by the power generation facility 13 and a price thereof.

The aforementioned viewpoint (2) may be determined based on, for example, a product of (a) a predicted value of power to be generated by the power generation facility 13, (b) an accuracy of prediction (such as a past correct answer rate), and (c) a charge per unit amount of power. In particular, the aforementioned (b) accuracy of the prediction (such as the past correct answer rate) is not information confirmed at the current time point. Thus, the transaction may be performed while the value is displayed as a future predicted value.

The aforementioned (a) predicted value of power to be generated by the power generation facility 13 and the accuracy of prediction (such as the past correct answer rate) may be determined from various factors. For example, the management server 2 may evaluate the value of the power generation facility 13 as a power generation facility, and a transaction may be performed based on the value. The management server 2 may display various evaluations on the output device 206 at the time of a transaction. The value of the power generation facility 13 as a power generation facility may also be evaluated from various viewpoints. For example, the value of the power generation facility 13 as a power generation facility may be evaluated from viewpoints of how long and/or how much output is predicted.

For example, the value of the power generation facility 13 as a power generation facility may be evaluated from a viewpoint other than the power to be generated (kWh). Specifically, the value of the power generation facility 13 as a power generation facility may be evaluated based on, for example, an amount of CO₂ emitted until the power generation facility is completed. The value of the power generation facility 13 as a power generation facility may be evaluated based on, for example, an amount of CO₂ emission per 1 kW of power generated by the power generation facility 13. The value of the power generation facility 13 as a power generation facility may be evaluated based on, for example, an amount of CO₂ to be emitted until the power generation facility is decommissioned. The value of the power generation facility 13 as a power generation facility may be displayed on the output device 206 or the like along with a comparison target, for example, as a determination criterion or the like used at the time of matching, or may be ranked and displayed.

The value of the power generation facility 13 as a power generation facility may be evaluated from a viewpoint of various risks. For example, the value of the power generation facility 13 as a power generation facility may be evaluated from a tendency of a frequency and/or a degree of natural disasters in the region where the power generation facility is installed. The value of the power generation facility 13 as a power generation facility may be evaluated from a public safety, a political stability, and/or the like in the region where the power generation facility is installed.

The value of the power generation facility 13 as a power generation facility may be evaluated based on a degree with which electricity is consumed in a region where the electricity is generated, that is, a degree of so-called local production and consumption. As a location where electricity is generated is closer to a location where the electricity is consumed, a load on an infrastructure such as an electric wire can be reduced. The electricity generated at a location close to the consumption location can provide a sense of security to an entity that consumes the electricity.

The value of the power generation facility 13 as a power generation facility may be evaluated from a viewpoint of a past output report of the power generation facility, a life of the power generation facility, a predicted deterioration of the power generation facility, and/or the like. The value of the power generation facility 13 as a power generation facility may be evaluated from a degree of load on the environment, for example, whether or not land elevation is used at the location where the power generation facility is installed. The value of the power generation facility 13 as a power generation facility may be evaluated as a degree of legality or the like of the power generation facility 13 from a viewpoint of cleanliness of renewable energy. The value of the power generation facility 13 as a power generation facility may be evaluated from, for example, a viewpoint of reducing the environmental load, an example of which is from a viewpoint of items listed in SDGs (Sustainable Development Goals). Note that any of the evaluations mentioned above may include an evaluation represented by a numerical value identified based on a predetermined criterion. For example, as five-stepped criteria for individual steps, criteria may be provided in which each increment in the number indicates a higher evaluation. Specifically, stepwise criteria such as 1 (bad), 2 (slightly bad), 3 (normal), 4 (slightly good), and 5 (good) may be defined, and the evaluation may include a numerical value indicating the value of each power generation facility 13.

The self-wheeling performed in step S306 of FIG. 9 is further described.

In the electricity procurement system of the present embodiment, conditions necessary for the self-wheeling may be reflected. For example, in the electricity procurement system of the present embodiment, a transaction (bid) exceeding a demand amount (maximum received power) handled by the electricity procurement system may be forbidden. In this way, the self-wheeling exceeding a consumable amount is avoided. Thus, for example, a penalty imposed situation can be avoided. To realize such a measure, the electricity procurement system of the present embodiment may automatically acquire a contract capacity (maximum received power) of a destination of self-wheeling.

When a transaction is performed in the electricity procurement system of the present embodiment, a bid for a power exceeding the demand amount handled by the electricity procurement system may be made unsuccessful. For example, the transaction platform 12 provided in the electricity procurement system of the present embodiment may acquire information related to a contract power capacity of a consumer from an external server of an electricity company (electricity retailer) of the like. When an external server of the OCCTO manages the information related to the contract power capacity of the consumer, the information may be acquired from the external server of the OCCTO. Such information related to the contract power capacity of the consumer may be acquired, for example, before participation in a bid in a transaction or before a successful bid. Such information related to the contract power capacity of the consumer may be acquired by using identification information and/or authentication information of the consumer. Such information related to the contract power capacity of the consumer may be acquired by using an API.

When a transaction is performed in the electricity procurement system of the present embodiment, various kinds of data may also be acquired in addition to the information related to the contract power capacity of the consumer. For example, the transaction platform 12 may acquire data related to power consumption in each time slot of 30 minutes in past. The transaction platform 12 may acquire data for the previous day, or data such as an average value, minimum value, or maximum value for a predetermined time or period (such as a weekday, week, month, or year).

The consumer participating in the transaction may submit (transmit) information indicating the contract capacity (maximum received power) of the contract with the electricity company together with a predetermined certificate to an operation side such as an external server in advance. The contract capacity indicates the maximum received power of a consumer entity facility to which electricity is self-wheeled after a successful bid. The transaction platform 12 may automatically acquire the information indicating the submitted (transmitted) contract capacity from the external server or the like. At this time, identification information and authentication information of the consumer may be used. At least one of the identification information or the authentication information may be issued from the external server to the consumer, for example. The consumer inputs at least the identification information and the authentication information to the transaction platform 12 at the time of a transaction and thus can participate in the transaction. By using the identification information and the authentication information, the transaction platform 12 can acquire the information indicating the contract capacity of the consumer to participate in the transaction from the external server. Thus, the transaction platform 12 can restrict a successful bid of the consumer for an amount of power exceeding the maximum received power of the consumer entity facility to which electricity is self-wheeled. In the transaction platform 12, the management server 2 may store the identification information and the authentication information in the storage device 203 or the like in association with the submitted (transmitted) information indicating the contract capacity.

Examples of screens that can be displayed at the time of the above-described transaction are further described.

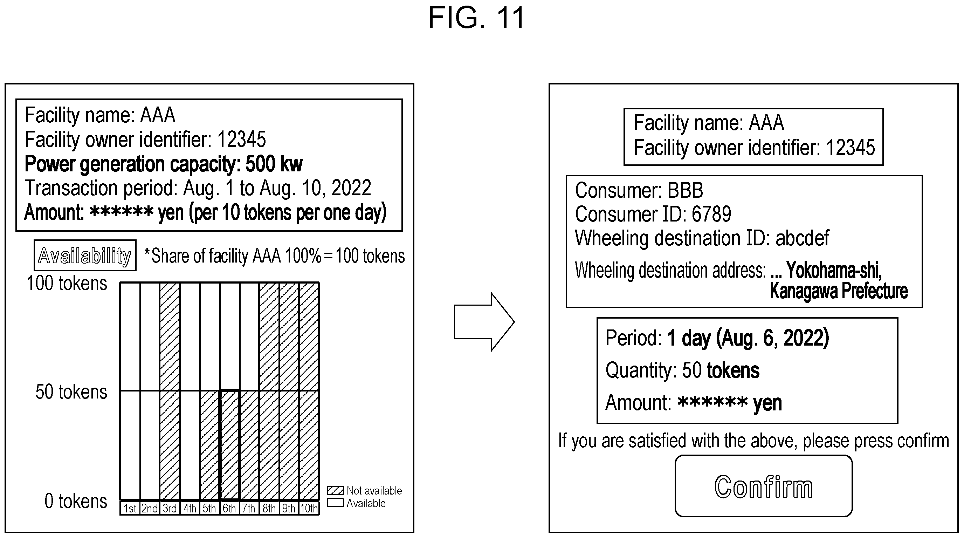

When a transaction is performed in the transaction platform 12, for example, screens illustrated in FIGs. 11 to 14 may be displayed on the output device 206 or the like of the consumer, the facility owner, the operator of the management server 2, or the like. Specifically, this is realized as a result of the CPU 201 creating information related to a screen and the management server 2 issuing a command to display a screen based on this information about the screen to the output device 206 or the like. FIGs. 11 to 14 present a selection screen on the left side and present a check screen on the right side. The transaction platform 12 may have a search function that enables a search to be performed in response to input of various conditions when STs, UTs, and/or the power generation facility 13 to be purchased are selected. The transaction platform 12 may display the STs, the UTs, and/or the power generation facility 13 found in the search on the selection screen. The input device 205 receives the input of the various conditions and input of information or an instruction related to the transaction.

FIG. 11 illustrates a screen that can be displayed on the output device 206 when an amount of a transaction is determined and STs are subjected to the transaction. Displaying such a screen allows the consumer to check the availability of the power generation facility 13, that is, slots in which STs can be purchased, in the selection screen illustrated on the left side of FIG. 11. In the selection screen illustrated on the left side of FIG. 11, a filled slot may indicate "not available" and an unfilled slot may indicate "available". In response to the consumer selecting an available slot in the selection screen illustrated on the left side of FIG. 11, the selection screen may transition to the check screen illustrated on the right side of FIG. 11. In the check screen illustrated on the right side of FIG. 11, the consumer can check the information related to the transaction before confirming the transaction. In the check screen illustrated on the right side of FIG. 11, in response to detection of input on a confirm button by the consumer, the transaction having the contents illustrated in the check screen on the right side of FIG. 11 can be confirmed.

In the screen illustrated in FIG. 11, when displaying tokens alone may mislead the consumer about an acquisition amount of the power generation capacity (kW), acquired tokens and a capacity (kW) corresponding to the acquired tokens may be displayed. In the selection screen illustrated on the left side of FIG. 11, the consumer may be requested to input a consumer ID and authentication information for login before the consumer performs selection input. In this case, in the transaction platform 12, the consumer ID and a wheeling destination ID (including information of the wheeling destination) may be stored in association with each other.

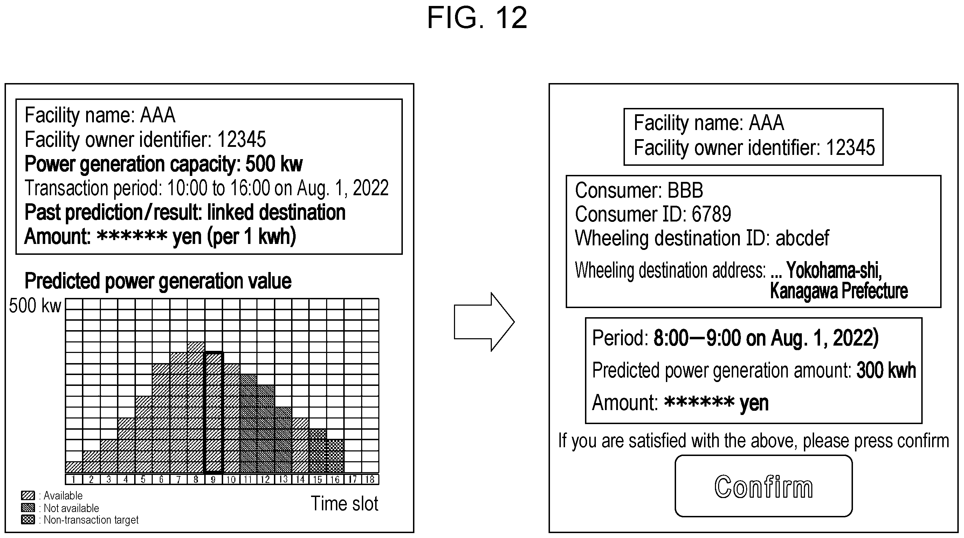

FIG. 12 illustrates a screen that can be displayed on the output device 206 when an amount of a transaction is determined and UTs are subjected to the transaction. Displaying such a screen allows the consumer to check a predicted power generation value of the power generation facility 13, that is, slots in which UTs can be purchased, in the selection screen illustrated on the left side of FIG. 12. The time units of electricity transaction is not particularly limited but can be, for example, 30 minutes as illustrated in the selection screen on the left side of FIG. 12. In the selection screen illustrated on the left side of FIG. 12, a filled slot may indicate "not available" and an unfilled slot may indicate "available". In the selection screen illustrated on the left side of FIG. 12, unselectable slots may be included as non-transaction target slots. In response to the consumer selecting an available slot in the selection screen illustrated on the left side of FIG. 12, the selection screen may transition to the check screen illustrated on the right side of FIG. 12. In the check screen illustrated on the right side of FIG. 12, the consumer can check the information related to the transaction before confirming the transaction. In the check screen illustrated on the right side of FIG. 12, in response to detection of input on a confirm button by the consumer, the transaction having the contents illustrated in the check screen on the right side of FIG. 12 can be confirmed.

In the selection screen illustrated on the left side of FIG. 12, the consumer may be requested to input a consumer ID and authentication information for login before the consumer performs selection input. In this case, in the transaction platform 12, the consumer ID and a wheeling destination ID (including information of the wheeling destination) may be stored in association with each other. The transaction platform 12 may acquire, by using the consumer ID and the authentication information, for example, a contract capacity (maximum received power) from an external server of the electricity company (electricity retailer) or the OCCTO and restrict a transaction exceeding the contract capacity. For example, as the restriction of the transaction, the transaction platform 12 may forbid or reject a bid exceeding the contract capacity, display only biddable slots, displaying slots separately as biddable ones and non-biddable ones, or make only biddable slots selectable. As the restriction of the transaction, the transaction platform 12 may permit a bit but make the bid unsuccessful. As the restriction of the transaction, when a bid exceeding the capacity is performed, the transaction platform 12 may display a warning screen, a warning indication, and/or the like prior to confirmation of the bid.

After a predetermined biddable time elapses from the bidding, the transaction platform 12 may allow the consumer with the highest bid to win the bid. The transaction platform 12 may display a screen indicating the content of the successful bid.

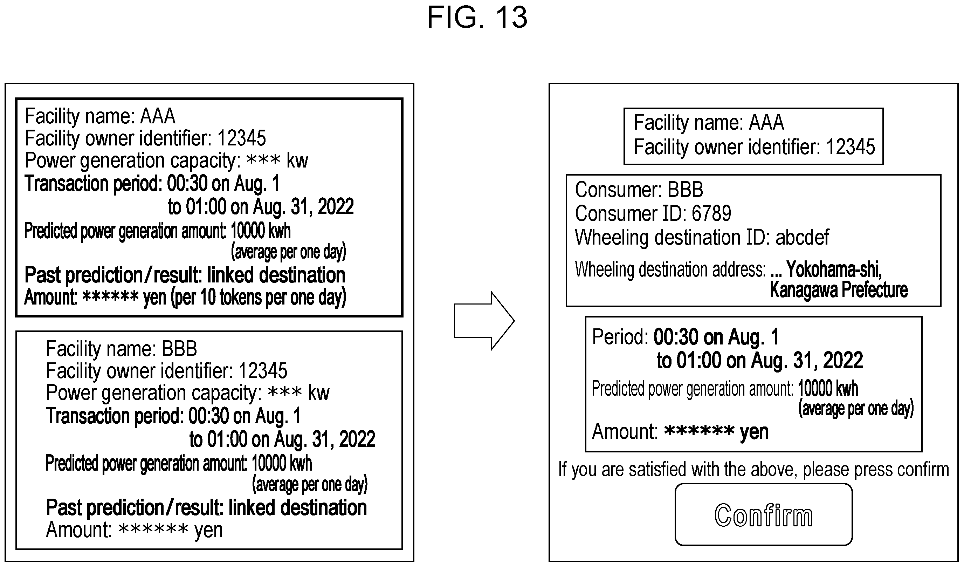

FIG. 13 illustrates a screen that can be displayed on the output device 206 when an amount of a transaction is determined and UTs are subjected to the long-term transaction. Displaying such a screen allows the consumer to check predicted power generation values of the power generation facilities 13, that is, facilities of which UTs can be purchased, in the selection screen illustrated on the left side of FIG. 13. As illustrated in the selection screen on the left side of FIG. 13, the consumer can select at least one of a power generation facility of a facility name AAA for example or a power generation facility of a facility name BBB for example. As illustrated in the selection screen on the left side of FIG. 13, for example, when the power generation facility of the facility name AAA is selected, to indicate this selection, the display item may be displayed to be distinguished from others by being surrounded by a thick frame line or changing the color of the display item. In response to the consumer selecting an item in the selection screen illustrated on the left side of FIG. 13, the selection screen may transition to the check screen illustrated on the right side of FIG. 13. In the check screen illustrated on the right side of FIG. 13, the consumer can check the information related to the transaction before confirming the transaction. In the check screen illustrated on the right side of FIG. 13, in response to detection of input on a confirm button by the consumer, the transaction having the contents illustrated in the check screen on the right side of FIG. 13 can be confirmed.

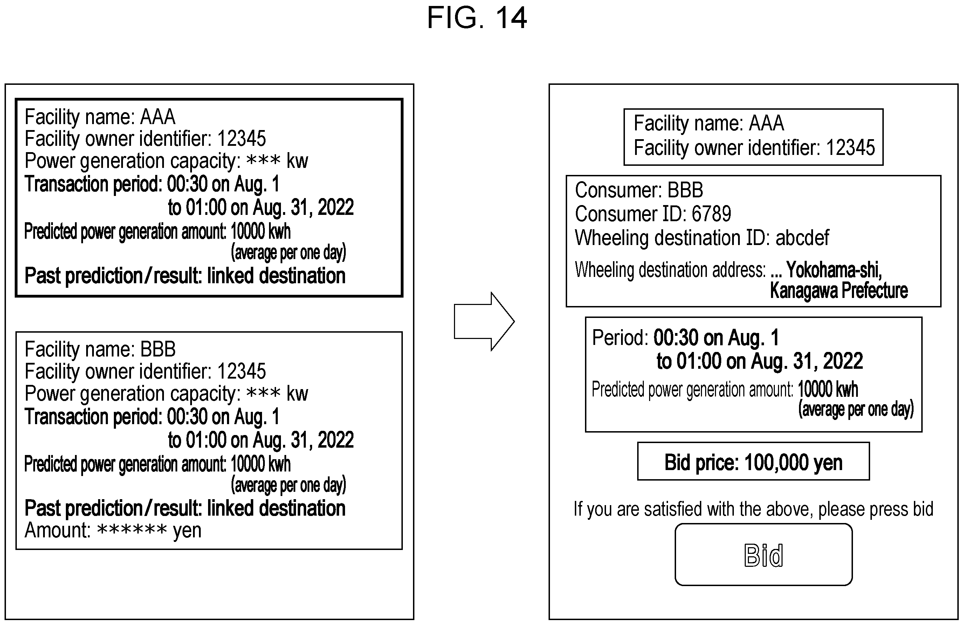

FIG. 14 illustrates a screen that can be displayed on the output device 206 when an amount of a transaction is determined by a bid and UTs are subjected to the long-term transaction. Displaying such a screen allows the consumer to check predicted power generation values of the power generation facilities 13, that is, facilities of which UTs can be purchased, in the selection screen illustrated on the left side of FIG. 14. As illustrated in the selection screen on the left side of FIG. 14, the consumer can select at least one of a power generation facility of a facility name AAA for example or a power generation facility of a facility name BBB for example. For the power generation facility of the facility name AAA illustrated in the selection screen on the left side of FIG. 14, a transaction amount is determined by a bid. That is, since the transaction amount is not determined yet at this time point, the amount is not displayed for the power generation facility of the facility name AAA illustrated in the selection screen on the left side of FIG. 14. As illustrated in the selection screen on the left side of FIG. 14, for example, when the power generation facility of the facility name AAA is selected, to indicate this selection, the display item may be displayed to be distinguished from others by being surrounded by a thick frame line or changing the color of the display item. In response to the consumer selecting an item in the selection screen illustrated on the left side of FIG. 14, the selection screen may transition to the check screen illustrated on the right side of FIG. 14. In the check screen illustrated on the right side of FIG. 14, the consumer can check the information related to the transaction before confirming the transaction and can also input a bid price for the selected power generation facility. In the check screen illustrated on the right side of FIG. 14, in response to detection of input on a bid button by the consumer with the bid price input, the transaction (bid) having the contents illustrated in the check screen on the right side of FIG. 14 can be confirmed.

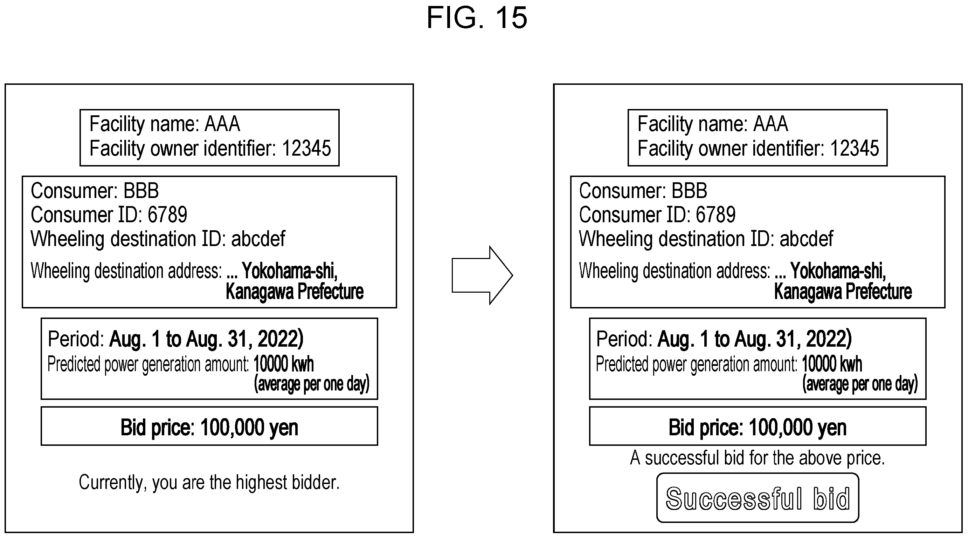

In response to detection of input on the bid button in the check screen illustrated on the right side of FIG. 14, the check screen may transition to, for example, a post-bid screen illustrated on the left side of FIG. 15. In the post-bid screen on the left side of FIG. 15, various kinds of information related to the bid transaction may be displayed on the output device 206 together with the confirmed bid price. As illustrated in the post-bid screen on the left side of FIG. 15, information indicating that the user who made the bid in FIG. 14 is the current highest bidder may be displayed.

For example, when another bidder makes a higher bid with the post-bid screen on the left side of FIG. 15 being displayed, the bid illustrated on the left side of FIG. 15 may be made unsuccessful. In this case, the successful bid is not completed. Thus, for example, the screen may return to the check screen illustrated on the right side of FIG. 14 so that a higher bid can be made.

On the other hand, when the post-bid screen on the left side of FIG. 15 is displayed and the transaction period ends, for example, a successful bid screen illustrated on the right side of FIG. 15 may be displayed. In the successful bid screen illustrated on the right side of FIG. 15, information indicating that a successful bid is made with the bid price may be displayed in response to the end of the transaction period. In the successful bid screen illustrated on the right side of FIG. 15, in response to detection of input on a successful bid button, the successful bid for the bid having the contents illustrated in the successful bid screen on the right side of FIG. 15 may be confirmed.

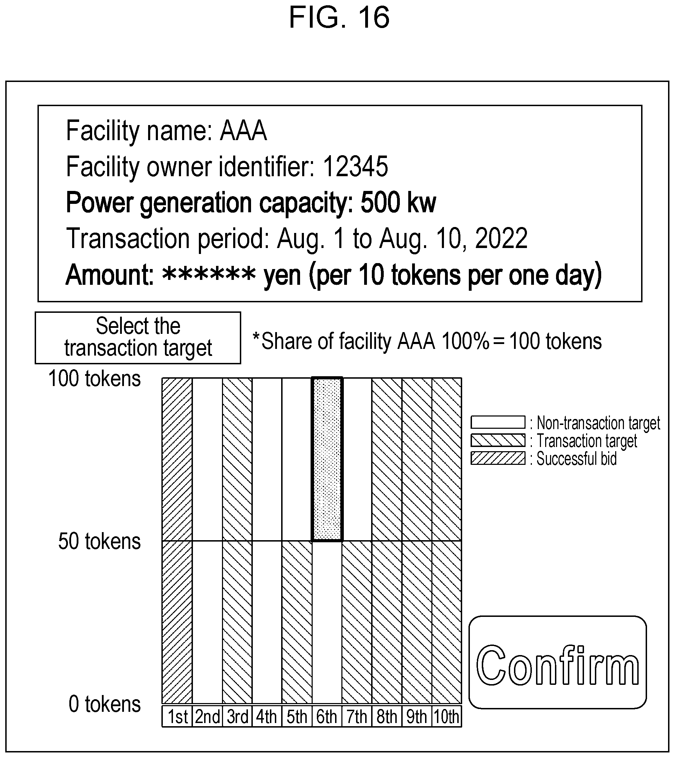

In the selection screen illustrated on the left side of FIG. 11, available slots and not available slots are illustrated as a scene where a transaction is performed. On the other hand, as an input screen for the facility owner, for example, transaction target slots, non-transaction target slots, and successfully bid slots may be displayed as in a selection screen illustrated in FIG. 16, for example. As illustrated in FIG. 16, for example, in response to selection of any one of the slots displayed as the non-transaction target, a display style such as a color of the slot may be changed to indicate that the slot is selected. Thereafter, based on input on a confirm button illustrated in FIG. 16, the display style may be changed, for example, the color may be changed to indicate that the slot is a transaction target. As a precondition of such an operation, the facility owner may be requested to input a facility owner ID and authentication information for login. In this case, for example, the asset information storage unit 231 illustrated in FIG. 8 may store the facility owner ID in association with information such as the facility name AAA and/or the power generation capacity.

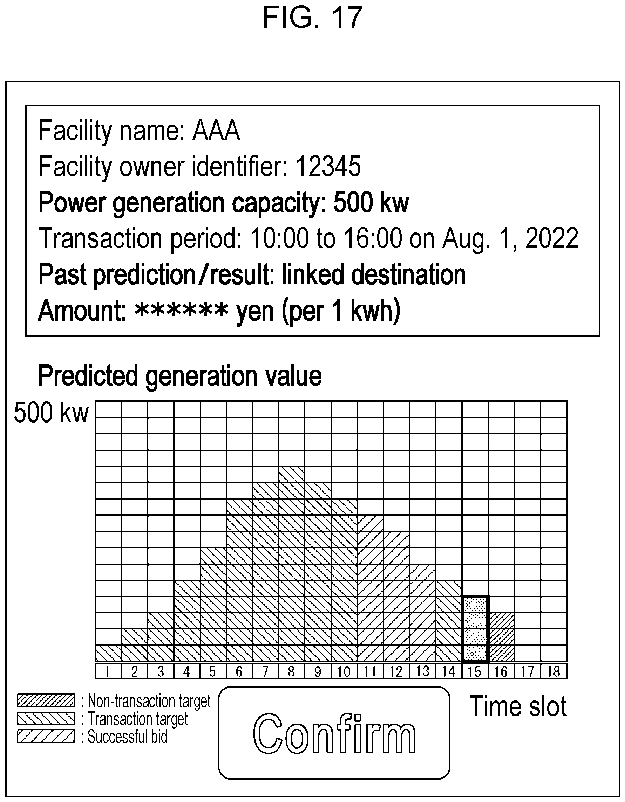

In the selection screen illustrated on the left side of FIG. 12, available slots, not available slots, and non-transition target slots are illustrated as a scene where a transaction is performed. On the other hand, as an input screen for the facility owner, for example, transaction target slots, non-transaction target slots, and successfully bid slots may be displayed as in a selection screen illustrated in FIG. 17, for example. As illustrated in FIG. 17, for example, in response to selection of any one of the slots displayed as the non-transaction target, a display style such as a color of the slot may be changed to indicate that the slot is selected. Thereafter, based on input on a confirm button illustrated in FIG. 17, the display style may be changed, for example, the color may be changed to indicate that the slot is a transaction target. As a precondition of such an operation, the facility owner may be requested to input a facility owner ID and authentication information for login. In this case, for example, the asset information storage unit 231 illustrated in FIG. 8 may store the facility owner ID in association with information such as the facility name AAA and/or the power generation capacity.

The facility owner ID may be registered and issued in the following manner, for example. As described above, the consumer participating in the transaction may submit (transmit) information indicating the contract capacity (maximum received power) of the contract with the electricity company together with a predetermined certificate to an operation side such as an external server in advance. Likewise, the owner of the power generation facility that participates in the transaction may submit (transmit) information on the facility subjected to the transaction together with a predetermined certificate to the operation side such as the external server in advance. The predetermined certificate may be, for example, a copy of a registration certificate when the facility owner is a corporation, an order contract of the facility, a receipt certifying purchase of the facility, and/or a certificate of the facility by a third party organization.

The asset information storage unit 231 may store the information thus submitted in association with the identification information or authentication information of the facility owner described below. At least one of the identification information or the authentication information of the facility owner may be issued from, for example, an external server to the facility owner. The facility owner inputs at least the identification information and the authentication information to the transaction platform 12 at the time of the transaction and thus can participate in the transaction. By using the input identification information and authentication information, the transaction platform 12 can acquire the information on the facility of the facility owner to participate in the transaction from the asset information storage unit 231 and display the information in a screen that can be displayed when the transaction is performed.

Time slots 1 to 18 illustrated in FIGs. 12 and 17 may be set to any time. For example, the unit of one time slot may be 30 minutes, and one day may be displayed as time slots 1 to 48.

For example, switching of the electricity retailer may be performed by a smart contract, for example, in the transaction platform. Since necessary data can be acquired by using the API, the transaction system may perform switching of the electricity retailer.

The electricity procurement system of the present embodiment may automatically create information of a self-wheeling plan, based on the information related to the transaction after the above-described matching processing is completed. The electricity procurement system of the present embodiment may transmit the information of the self-wheeling plan thus created, together with the information on the consumer that has made the transaction, to, for example, the OCCTO or the like after the above-described matching processing is completed. The information of the plan to be transmitted to the OCCTO or the like may include various kinds of information such as information on a transmission source of the plan, information on a transmission destination of the plan, an amount of power subjected to the plan, a time slot subjected to the plan, and/or a predicted power generation value of the power generation facility, for example. This allows self-wheeling to be performed after the plan of self-wheeling is created and reported to each related entity.

The electricity procurement system of the present embodiment may automatically conclude, by a smart contract or the like, a contract necessary for self-wheeling with an electricity retailer having a contract to supply electricity to a facility of the consumer. In the electricity procurement system of the present embodiment, in response to closing of the transaction by the sale processing unit 216, the management server 2 may create a plan of self-wheeling and submit the plan to a predetermined organization such as the OCCTO, for example, by a previous day of the day on which the self-wheeling is performed.

An example of a self-wheeling contract in the electricity procurement system according to the present embodiment is further described for two cases below.

### (1) Case of Same Electricity Retailer

The case of the same electricity retailer may be a case where an electricity retailer having a contract to handle a power generated from the power generation facility is the same as an electricity retailer having a contract to supply a power to the facility of the consumer. In such a case, the electricity procurement system according to the present embodiment may automatically conclude, with the electricity retailer by a smart contract or the like, a contract for self-wheeling related to the matching processing.

### (2) Case of Different Electricity Retailers

The case of the same electricity retailer may be a case where an electricity retailer having a contract to handle a power generated from the power generation facility is different from an electricity retailer having a contract to supply a power to the facility of the consumer. In such a case, the electricity procurement system according to the present embodiment may automatically conclude, with each of the electricity retailers by a smart contract or the like, a contract for self-wheeling related to the matching processing.

In these cases, the electricity procurement system of the present embodiment may conclude a contract for self-wheeling along with the above-described matching processing. The electricity procurement system of the present embodiment may take a measure to complete the matching only when the electricity retailer having a contract to handle a power generated from the power generation facility is identical the electricity retailer having a contract to supply a power to the facility of the consumer.

In this case, an entity having a contract with the electricity retailer is an entity having a contract to provide or supply a power to an equipment or a facility owned by the contractor. For example, the electricity procurement system may make a transaction only between multiple consumers having a contract with the same electricity retailer and the owner of the power generation facility. The electricity procurement system may forbid participation, in a transaction, of a consumer having a contract with an electricity retailer different from the electricity retailer with which the owner of the power generation facility has a contract.

A manner of purchasing tokens in the electricity procurement system of the present embodiment is described more specifically.

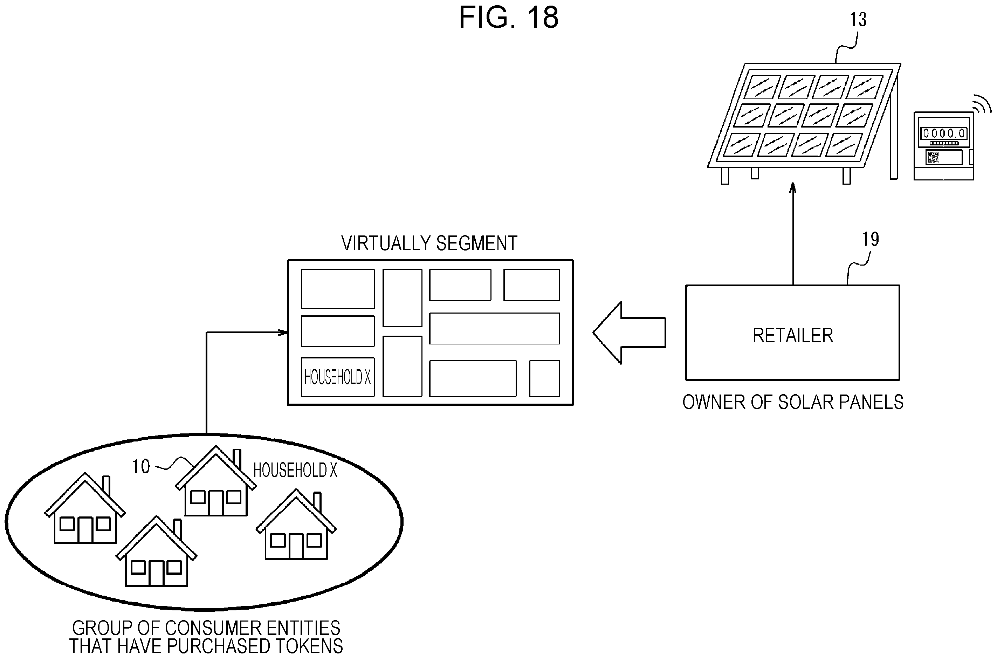

FIG. 18 is a diagram illustrating an example of purchase of tokens in the electricity procurement system of the present embodiment. In FIG. 18, a case is described where the owner of the power generation facility is an electricity retailer, for example.

In the embodiment above, the example has been described where the owner of the power generation facility participates in the transaction as the facility owner by registering the information of the power generation facility in the transaction PF. In an electricity procurement system according to an embodiment, a retailer may participate in a transaction as a facility owner of a power generation facility such as a solar panel. In such a case, the configuration other than the foregoing may be the same as and/or similar to the configuration of the above-described embodiment.

For example, the retailer participates in the transaction as the facility owner of the power generation facility, and thus can increase the reliability for an entity participating in the transaction. That is, in a transaction using the transaction PF, the consumer wins a bid for the security tokens or utility tokens of the power generation facility, and thus acquires a right to receive a power related to these tokens. Since a retailer that has already supplied a power has a result of supplying the power, the anxiety of the consumer that the consumer may not be able to receive the power related to the tokens which the consumer won can be reduced.

In an embodiment, for example, a retailer having a power generation facility in advance may participate in a transaction. In an embodiment, for example, a retailer may collect funds from a consumer group made up of multiple consumers, purchase a power generation facility such as a solar panel, and install the power generation facility in a predetermined land to enable power generation. Such a transaction may be performed in a manner that is the same as and/or similar to the manner in the above-described embodiment. The consumer of a successful bid receives supply of a power in accordance with the tokens which the consumer won from the retailer who is the facility owner.

On the other hand, as illustrated in FIG. 18, when funds are collected from the consumer group and the power generation facility such as the solar panel 13 is purchased, the electricity procurement system may issue or give this group of consumer entities a predetermined amount of tokens without performing the transaction in the above-described embodiment. In this case, a retailer 19 may also invest funds in addition to the consumer entities. Thus, the group of consumer entities are supplied with a power corresponding to this share of the tokens from the retailer 19 who is the facility owner.

An electricity procurement system according to an embodiment may issue or give tokens to a consumer who is each consumer entity in the group of consumer entities so that each consumer can receive supply of the corresponding power. In this case, the tokens may be made even for the individual consumer entities, or may be allocated according to the provided funds.

In FIG. 18, the retailer 19 may be, for example, an owner of solar panels. The retailer 19 may directly purchase the solar panels using the funds collected from the group of consumer entities. As illustrated in FIG. 18, the retailer 19 may virtually segment the solar panels into sections and may continue to retail the ownership right of the sections.

For example, when the electricity procurement system issues 100 tokens as the security tokens to the power generation facility associated with the investment of the group of consumer entities, the electricity procurement system may give two tokens to the consumer entity that has invested 2% of the total investment amount. For example, when the maximum output of the power generation facility per day is 100 kWh, the consumer entity that is given two tokens is supplied with a power of 2 kw per day from the retailer 19 that is the facility owner. As long as the customer entity possesses these two tokens, the consumer entity may be semi-permanently supplied with the power of 2 kw per day from the retailer 19 that is the facility owner. Note that 2 kw per day is an actual value or a theoretical value. Therefore, the supplied power may actually decrease due to deterioration or failure of the power generation facility.

In FIG. 18, even a group of consumer entities that has not provided funds for purchasing the solar panels may purchase tokens from the retailer 19, the group of consumer entities that has provided funds, or a consumer entity belonging to the group of consumer entities that has provided funds. When the token is purchased in this way, the power may be supplied from the retailer 19. For example, as illustrated in FIG. 18, suppose that a consumer entity that is a household X that has not provided funds purchases two tokens corresponding to 2% of the entire funds from the retailer 19 that has provided a part of the funds. In this case, based on the same and/or similar idea as and/or to that described above, this consumer entity may be regarded to have purchased semi-permanent tokens equivalent to 2 kW per day from the retailer 19.

When a group of consumer entities that has not provided funds purchases tokens from the retailer 19 that has provided a part of the funds, the group of consumer entities can be supplied with the power corresponding to the tokens purchased from the retailer 19. In this case, the electricity procurement system may perform management such that the tokens are given to the group of consumer entities. The group of consumer entities and the retailer 19 may make a contract to supply a predetermined amount of power corresponding to predetermined tokens without the intervention of the electricity procurement system, so that the group of consumer entities may virtually possess the tokens through the retailer 19.

In this way, the electricity retailer becomes a direct transaction target, and thus can increase the reliability of the fact that the power generation facility of the transaction target actually exists and/or the information related to the facility displayed at the time of the transaction.

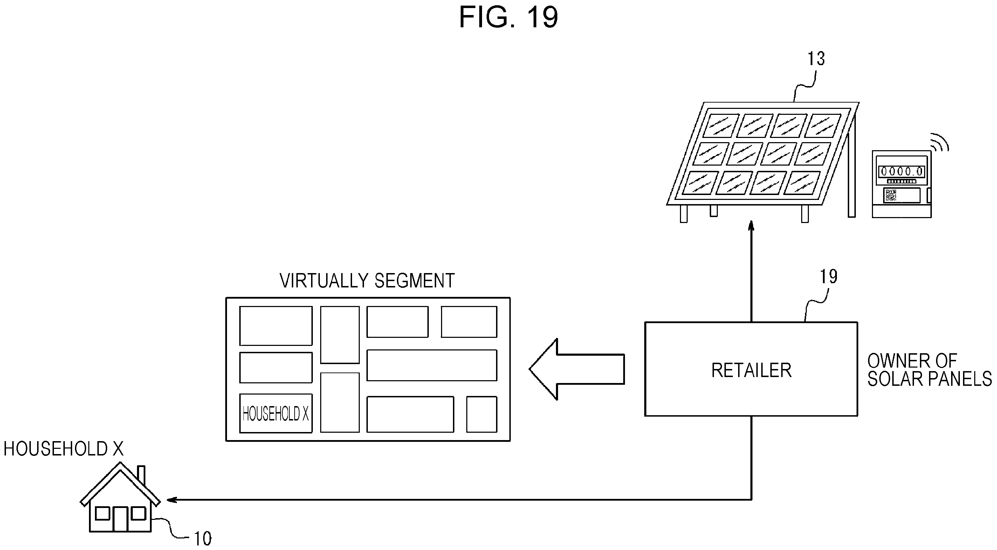

FIG. 19 is a diagram illustrating an example of charging in the electricity procurement system of the present embodiment. Also in FIG. 19, for example, the case is described where the owner of the power generation facility is the electricity retailer.

In the embodiment above, the example has been described where the owner of the power generation facility participates in the transaction as the facility owner by registering the information of the power generation facility in the transaction PF. In an electricity procurement system according to an embodiment, a retailer may participate in a transaction as a facility owner of a power generation facility such as a solar panel. In such a case, the configuration other than the foregoing may be the same as and/or similar to the configuration of the above-described embodiment.

For example, the retailer participates in the transaction as the facility owner of the power generation facility, and thus can increase the reliability for an entity participating in the transaction as in the case illustrated in FIG. 18.

In an embodiment, an example case is described where the retailer 19 is a facility owner of a power generation facility that generates a power of 10,000 kWh every month as illustrated in FIG. 19. In this case, the retailer 19 may perform asset registration as asset information of this power generation facility in an electricity procurement system according to an embodiment, and thus is allowed to participate in a transaction PF as the facility owner.

In this case, an electricity procurement system according to an embodiment may issue, for example, 100 tokens as the security tokens. When a consumer that is a household X wins a bid for two tokens from the transaction PF of the electricity procurement system, this consumer obtains a right to be supplied with an amount of power of 200 kWh per month, which corresponds to 2% of the power of 10,000 kWh per month, from the retailer 19. Suppose that when the consumer that has participated in the transaction has a power supply contract with the retailer 19, a power usage fee per month at the household X is, for example, 450 kWh. In this case, by cancelling the electricity of 200 kWh acquired by the transaction with the right to be supplied, a power of 250 kWh, which is obtained by subtracting 200 kWh from 450 kWh, may be regarded to be used, for example.

In this case, the retailer 19 may charge the household X illustrated in FIG. 19 for the use of the power of 250 kWh. Subtracting the amount of generated power corresponding to the tokens acquired by the transaction from the amount of power to be purchased from the retailer 19 as the amount of power to be charged in this way is referred to as "net metering".

In this way, when the consumer (household X) completes the transaction and acquires 2% of the tokens of the power generation facility of 10,000kWh per month, the amount of power for 2% (200 kWh) may be subtracted from the amount of power charged every month by the retailer with which the transaction has been made.

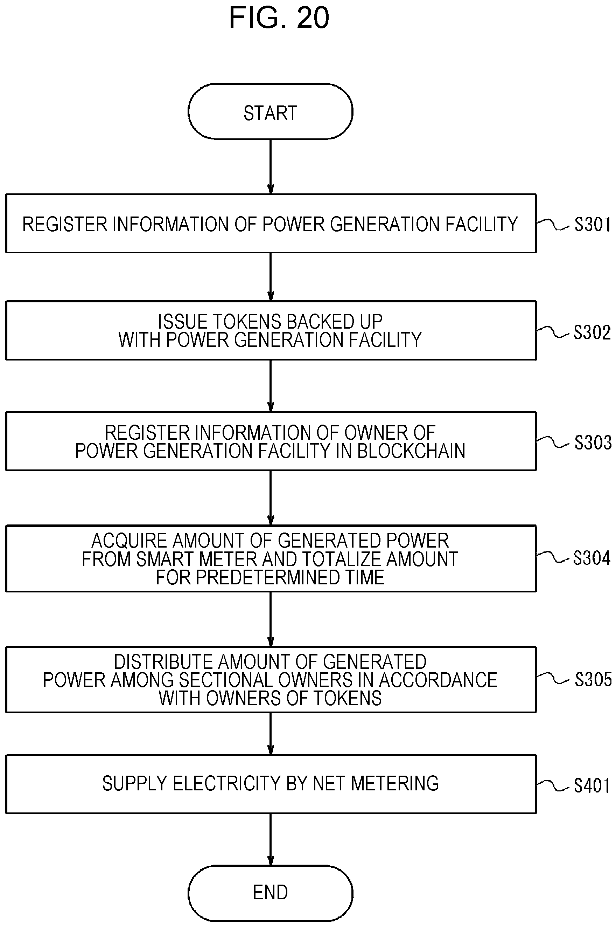

FIG. 20 is a flowchart for describing an operation of an electricity procurement system according to an embodiment for supplying electricity by net metering.

In the operation illustrated in FIG. 20, an operation from step S301 to step S305 may be performed in a manner that is the same as and/or similar to the operation illustrated in FIG. 9.

As illustrated in FIG. 20, in response to the amount of generated power being allocated to a sectional owner in accordance with the owners of the tokens in step S305, the management server 2 may supply electricity by the net metering described above (S401).

Although the present embodiments have been described above, the above-described embodiments are intended to facilitate understanding of the present disclosure and are not intended to be construed as limiting the present disclosure. The present disclosure can be changed and improved without departing from the gist thereof, and equivalents thereof are also included in the present disclosure.

For example, in the present embodiment, the tokens issued by the blockchain 4 are used to manage whereabouts of the ownership right and the offtake right of the power generation facility 13. However, in an embodiment, the blockchain technology may not necessarily used for the above-described management of whereabouts. For example, the ownership right and the offtake right may be managed in a predetermined database, and a manager of the database (an operator of the management server 2) may ensure the authenticity of the contents. That is, in an embodiment, the tokens may be issued (recorded) in the predetermined database.

In the present embodiment, the owner information on the owner of the power generation facility 13 is managed in the ledgers of the blockchain 4. However, the management server 2 may include an owner information storage unit that stores the owner information.

An electricity procurement system according to an embodiment may collect a fee for a transaction or a fee for self-wheeling.

In an electricity procurement system of an embodiment, a predicted amount of power to be generated may differ for each time slot. In an electricity procurement system according to an embodiment, when a predicted amount of power to be generated is wrong, for example, a measure such as imposing a penalty in accordance with a degree of deviation may be taken. In an electricity procurement system of an embodiment, a transaction may be performed by presenting for example, a predetermined ratio for safety, instead of presenting an original predicted value as the predicted value of power to be generated. For example, when the predicted value of power to be generated is originally 1000 kWh, a transaction may be performed by intentionally presenting 900 kWh or the like.

In an electricity procurement system of an embodiment, the power generation facility 13 may be not only solar panels (solar cells) that perform photovoltaic generation but also a storage battery (including an EV (electric vehicle)), for example. In an electricity procurement system according to an embodiment, when the power generation facility 13 includes a storage battery, the storage battery may function as a power buffer.

In an electricity procurement system according to an embodiment, when power generated by the power generation facility 13 has a surplus, an electricity transmission and distribution company may purchase the surplus. In an electricity procurement system of an embodiment, when power generated by the power generation facility 13 is insufficient, a purchasing side (power generating side) may pay a penalty.

In an electricity procurement system of an embodiment, a mechanism may be constructed in which an amount of power or the like to be obtained in the future in accordance with a collection period of investment is reflected on a current value for discount.

### <Disclosed Items>

Note that the present disclosure also includes configurations below.
[Item 1] An information processing apparatus comprising:
   a token issuing unit configured to issue, in a blockchain, tokens backed up with a power generation facility and representing an ownership right and an offtake right of the power generation facility;
   a demand amount input unit configured to receive, from a consumer, a demand amount of power desired to be procured from the power generation facility;
   a sale processing unit configured to perform processing related to sale of the tokens to the consumer; and
   a token transfer unit configured to transfer an amount of tokens corresponding to the demand amount to a wallet of the consumer.
[Item 2] The information processing apparatus according to item 1, further comprising:
   a predicted power generation acquisition unit configured to acquire a predicted value of an amount of power to be generated by the power generation facility; and
   a power generation plan output unit configured to, for each consumer, divide the predicted value of the amount of power to be generated, in accordance with an amount of tokens scheduled to be possessed by the consumer, and output a divided predicted value.
[Item 3] The information processing apparatus according to item 1 or 2, further comprising:
   a power generation result acquisition unit configured to acquire an actual value of an amount of power generated by the power generation facility from a smart meter provided in the power generation facility; and
   a power generation result output unit configured to output the predicted value and a divided actual power generation value obtained by dividing the actual value in accordance with an amount of tokens scheduled to be possessed.
[Item 4] The information processing apparatus according to any one of items 1 to 3, wherein
   the demand amount input unit is configured to receive designation of a condition for the power generation facility together with the demand amount,
   the information processing apparatus further comprises:
      an asset information storage unit configured to store, for each of a plurality of the power generation facilities, asset information related to the power generation facility; and
      a matching processing unit configured to search for the asset information that matches the condition, and
      the token transfer unit is configured to transfer the amount of tokens corresponding to the demand amount from the wallet of the consumer from a wallet of the power generation facility corresponding to the matching asset information.

### REFERENCE SIGNS

- 1: user terminal
- 2: management server
- 3: communication network
- 4: blockchain
- 10: consumer
- 11: demand facility
- 12: marketplace
- 13: power generation facility
- 14: smart meter
- 15: facility provider
- 16: wide-area organization system
- 17: retailer
- 18: service providing company
- 131: section
- 211: asset registration unit
- 212: token issuing unit
- 213: demand amount input unit
- 214: selling amount input unit
- 215: matching processing unit
- 216: sale processing unit
- 217: token transfer unit
- 218: predicted power generation acquisition unit
- 219: power generation result acquisition unit
- 220: report creation unit
- 221: API processing unit
- 231: asset information storage unit

## Claims

1. An information processing apparatus comprising:
a token issuing unit configured to issue a first token representing a share of an ownership right of a power generation facility in a predetermined database;
a sale processing unit configured to execute a transaction of a power generated by the power generation facility, based on information related to the power generation facility, information related to the share of the ownership right of the power generation facility, and information related to a price corresponding to the share; and
a token transfer unit configured to transfer the first token to a purchaser in the transaction in accordance with the share of the ownership right, in response to the transaction by the sale processing unit being closed.

2. An information processing apparatus comprising:
a token issuing unit configured to issue a first token representing a share of an ownership right of a power generation facility in a predetermined database;
a predicted power generation acquisition unit configured to predict a total power generated by the the power generation facility in a predetermined time slot;
a sale processing unit configured to execute a transaction of a power generated by the power generation facility, based on information related to the power generation facility, information related to a power predicted by a power generation prediction unit, and information related to a price corresponding to the share; and
a token transfer unit configured to transfer the first token to a purchaser in the transaction in accordance with the power predicted by the power generation prediction unit, in response to the transaction by the sale processing unit being closed.

3. An information processing apparatus comprising:
a token issuing unit configured to issue a first token representing a share of an ownership right of a power generation facility in a predetermined database;
a sale processing unit configured to execute a transaction of a power generated by the power generation facility, based on information related to the power generation facility, information related to an amount of carbon dioxide emission per unit power generated by the power generation facility, and information related to a price corresponding to the share; and
a token transfer unit configured to transfer the first token to a purchaser in the transaction in accordance with a power predicted by a power generation prediction unit, in response to the transaction by the sale processing unit being closed.

4. The information processing apparatus according to any one of claims 1 to 3, wherein the sale processing unit is configured to execute the transaction of the power generated by the power generation facility by using information related to a prediction accuracy based on a past result.

5. The information processing apparatus according to claim 2, wherein a generated power corresponding to the first token is self-wheeled to a predetermined demand facility in the time slot, in response to the transaction by the sale processing unit being closed.

6. The information processing apparatus according to any one of claims 1 to 5, wherein the sale processing unit is configured to forbid or reject a bid for a power exceeding a contract capacity of a demand facility predetermined as a facility to which self-wheeling is performed, in response to the transaction by the sale processing unit being closed.

7. The information processing apparatus according to any one of claims 1 to 6, wherein the sale processing unit is configured to close the transaction only when an electricity retailer having a contract to handle a power generated from the power generation facility is identical to an electricity retailer having a contract to supply a power to a facility of a consumer of the power.

8. The information processing apparatus according to any one of claims 1 to 7, further comprising a communication interface configured to acquire, from outside, information related to a contract capacity of a demand facility predetermined as a facility to which self-wheeling is performed.

9. The information processing apparatus according to any one of claims 1 to 8, wherein in response to the transaction by the sale processing unit being closed, a plan of self-wheeling is created and the plan is submitted to a predetermined organization by a previous day of a day on which the self-wheeling is performed.

10. The information processing apparatus according to any one of claims 1 to 9, wherein in response to the transaction by the sale processing unit being closed, a contract necessary for the self-wheeling is carried out by an electronic contract between a company that performs the self-wheeling and an owner of the demand facility.

11. A non-transitory tangible medium including a program recorded thereon, the program causing a computer to execute:
token issuing processing of issuing a first token representing a share of an ownership right of a power generation facility in a predetermined database;
sale processing of executing a transaction of a power generated by the power generation facility, based on information related to the power generation facility, information related to the share of the ownership right of the power generation facility, and information related to a price corresponding to the share; and
transfer processing of transferring the first token to a purchaser in the transaction in accordance with the share of the ownership right, in response to the transaction by the sale processing unit being closed.
